# EUROPEAN PATENT APPLICATION

(11) **EP 1 569 457 A2**
(43) Date of publication of application: **31.08.2005**
(21) Application number: 05250807.4
(22) Date of filing: 11.02.2005
(51) Int. Cl.: H04N 7/24, H04N 5/00

(54) **Information processing system, information processing method, and computer program**

(30) Priority: 26.02.2004 JP 2004051362
(71) Applicant: SONY CORPORATION, Tokyo 141 (JP)
(72) Inventor: Ishido, Daisuke, c/o Intellectual Property Dpt., Shinagawa-ku, Tokyo 141 (JP)
(74) Representative: DeVile, Jonathan Mark

(57) **Abstract**

A contents processing system and method is disclosed which is arranged to record copyright protected content so as to be owned by a plurality of AV apparatus. The plurality of AV apparatus having a digital broadcast reception function and a content recording function cooperate with each other via a network such that they operate virtually as a single information processing apparatus. When copy-once copyright protected content is to be reserved for recording, a required quantity of the content is designated on a GUI. Consequently, the same content is recorded by the plural number of apparatus such that each copy is owned by the apparatus. Any of the plural number of contents can be moved to another apparatus in accordance with a setting on the GUI.

## Description

### BACKGROUND OF THE INVENTION

The present invention relates to contents processing systems, contents processing methods and computer programs for recording broadcast content.

Embodiments of the present invention can provide contents processing systems, contents processing methods and computer programs for recording distributed content, and more particularly to contents processing systems, contents processing methods and computer programs for recording program content provided from a broadcasting station.

More specifically, embodiments of the present invention can provide contents processing systems, contents processing methods and computer programs for recording copyright protected content to which contents protection requirement such as copy-once requirement is set, and more particularly to contents processing systems, contents processing methods and computer programs for recording copyright protected content in such a manner as to be owned by a plurality of apparatus.

In the information civilization society at present, the broadcast has an inestimably significant role. Above all, the influence of television broadcasting which delivers video information together with audio information directly to the TV audience is significant. Broadcasting techniques include various techniques such as signal processing techniques, signal transmission and reception techniques, and audio and video information processing techniques. Further, program contents are provided to users in various transmission forms such as broadcasting systems by radio waves such as ground waves and satellite waves, cable television systems and network systems which provide network programs making use of computer communication.

The rate of propagation of TV sets is so high that TV sets are set up in almost all homes, and broadcast contents distributed from broadcasting stations are viewed by many and unspecified persons. As another form of viewing of broadcast contents, it is common to record received contents once on the TV viewer side and then reproduce the contents at a suitable opportunity.

Recently, digital broadcasting has been started and is being popularized. This arises from the facts that digital data allows more efficient utilization of the wavelength band and achievement of a higher picture quality and a higher sound quality than analog data and that digital data has a high affinity for data other than video and audio data.

Where broadcasting contents are digital data, four strings of data can be carried by one channel and data for a high definition television system can be transmitted as it is. Therefore, broadcasting contents in the form of digital data provide a high degree of serviceability and diversification. For example, where various kinds of system information such as an EPG (Electric Program Guide) are sent together with video information and audio information, the services to users (TV viewers) can be enhanced. The EPG includes presentation information such as broadcasting schedules and program names of broadcast programs and functions for recording reservation for a VTR and so forth.

On the other hand, thanks to development of the information techniques, it has become possible to store a large amount of AV data including images and sound. For example, it has become possible to acquire a hard disk drive (HDD) having a capacity of several tens GB or more at a comparatively low expense, and HDD-based recorders have been placed on the market.

The HDD is an apparatus which allows random access to data recorded therein. Accordingly, when recorded contents are to be reproduced, there is no necessity to reproduce recorded programs merely in order from the top of them as in the case of a conventional video tape, but it is possible to start reproduction immediately from an arbitrary program (or an arbitrary scene in a program or an arbitrary corner). A form of viewing wherein a receiver (television set or video recording and reproducing apparatus) which incorporates a large capacity storage such as a hard disk apparatus to store received broadcast contents once in the receiver and then reproduce the stored broadcast contents is called "server type broadcasting".

According to a server type broadcasting system, it is possible not only to view a broadcast on the real time basis as in the case of reception of a television broadcast, but also to distribute images and sound in advance and reproduce the images and sound from a designated point of time or to make use of information distributed simultaneously to perform a scene search or digest viewing.

Further, in recent years, such a style that various contents are managed in a home server in a home and are copied on and carried together with various disks or mobile apparatus as occasion demands has been popularized rapidly. However, when such recorded contents are utilized, there is the possibility that a problem may occur with handling of copyright or other rights relating to utilization of contents.

For example, the Copyright Law of Japan (Law No. 48, 1970), Section 30 prescribes "It shall be permissible for a user to reproduce by himself a work forming the subject matter of copyright (hereinafter in this Subsection referred to as a "work") for the purpose of his personal use, family use or other similar uses within a limited circle (hereinafter referred to as "private use"). Therefore, in Japan, it is permitted for a person to duplicate any literary work irrespective of the type of the literary work and the form of duplication only if the person itself uses the duplicate personally or within a home or the like. On the other hand, the Copyright Law of Japan, Section 49(1) prescribes that, if a duplicate produced for personal use is used for any other than the purpose, then the duplication right of the copyright owner works. In short, out-of-purpose use is inhibited.

Particularly in regard to the digital broadcasting described above, since digital contents can be duplicated readily, reinforcement of management of the copyright is intended. For example, the ARIB (Association of Radio Industries and Businesses) in Japan obliges introduction of a copy control function such as "copy permissible in only one generation" (copy-once) and sets forth severe contents protection provisions (refer to
http://itpro.nikkeibp.co.jp/free/ITPro/OPINION/20031211/1 /).

It is not permitted to duplicate contents of the copy-once. Therefore, in order to copy and carry such contents into and together with a mobile apparatus, the contents in a home server must be deleted, and it is impossible to retain the contents in both of the home server and the mobile apparatus.

One of possible solutions to the problem just described is that contents are recorded by a plurality of apparatus by which the contents are required. However, the solution requires setting for recording separately on the individual apparatus, which is very cumbersome. Also it is a possible solution to use an apparatus to perform setting for recording of different contents to a plurality of apparatus. However, also in this instance, although operation is performed for the single object apparatus, recording setting must be performed for each of the contents, which is cumbersome.

### SUMMARY OF THE INVENTION

Various aspects and features of the present invention are defined in the appended claims.

Embodiments of the present invention can provide a contents processing system, a contents processing method and a computer program which are superior in that program content provided from a broadcasting station can be recorded suitably.

Embodiments of the present invention can provide a contents processing system, a contents processing method and a computer program which are superior in that copyright protected content to which a content protection requirement such as a copy-once requirement is set can be recorded suitably.

Embodiments of the present invention can also provide a contents processing system, a contents processing method and a computer program which are superior in that contents copyright protected can be recorded suitably in such a manner as to be owned commonly by a plurality of apparatus.

In order to attain the objects described above, according to an aspect of the present invention, there is provided a contents processing system wherein a plurality of apparatus having a recording reservation function cooperate with each other on a network to perform a process copyright protected for broadcast contents, including a recording reservation inputting section operable by a user for designating a broadcasting program to be reserved for recording and a recording quantity of the broadcasting program, a recording reservation setting section operable in response to a recording reservation inputted through the recording reservation inputting section for specifying, from among those of the apparatus which cooperate with each other on the network, those apparatus to which the recording reservation should be set, and an owned contents management section for managing contents recorded and owned by the apparatus which cooperate with each other on the network.

It is to be noted here that the term "system" is used to represent a logical set apparatus composed of a plurality of apparatus or a plurality of modules for implementing predetermined functions, which may be included in the same housing or may be provided discretely.

While a style wherein various contents are managed in a home server in a home and are copied on and carried together with various disks or mobile apparatus as occasion demands has been popularized as described above, the style has a problem in terms of the copyright protection of contents. Above all, in digital broadcasting, reinforcement of copyright management is being proceeded, and introduction of a copy control function such as copy-once requirement is obliged.

According to the present invention, a recording reservation regarding a designated broadcasting program, that is, regarding the same contents, can be set to a number of network AV apparatus equal to a designated recording quantity. In particular, if the user designates, when the user performs recording reservation of copy-once contents copyright protected, a required quantity of the contents on a recording reservation GUI, then the user can record the same broadcasting contents on the plural number of apparatus. Consequently, the same contents can be owned by the plural number of apparatus.

The recording reservation inputting section may present information relating to the broadcasting program reserved for recording together with the designated recording quantity on a recording reservation screen.

The recording reservation screen may be formed, for example, as a recording reservation setting screen of a line display form wherein an input entry is displayed for each broadcasting program reserved for recording or as a recording reservation setting screen of a calendar type for each one week. Further, the recording quantity may be represented by a numeral or by a color in a pertaining broadcasting program column which represents the quantity.

The recording reservation setting section may specify those apparatus to which a recording reservation should be set in accordance with predetermined recording reservation conditions. For example, the recording reservation setting section may perform the specification of the apparatus using whether a recording reservation is set already in a time zone which overlaps with that of the recording reservation, whether a free recording capacity sufficient for reserved recording of the recording reservation is available and whether a recording reservation setting can be accepted as the recording reservation conditions.

The recording reservation inputting section may accept, when the recording quantity of 2 or more is designated, designations of recording modes which are different among different ones of the apparatus to which the recording reservation should be set.

The owned contents management section may present contents owned by those apparatus which cooperate with each other on the network together with the total number of the owned contents on an owned contents table screen. In this instance, a request for processing regarding any of the owned contents such as reproduction, move or deletion of contents may be accepted on the owned contents table screen.

The contents processing system may further includes a contents reproduction section for performing a reproduction process of contents in response to a reproduction request of the contents inputted through the recording reservation inputting section. The same contents are sometimes owned by a plurality of apparatus on the network. Therefore, the contents reproduction section may select, from among two or more of those apparatus which own object contents, an apparatus having a high surplus processing capacity so as to reproduce the contents.

The contents processing system may further includes a contents moving section operable in response to a move request of contents copyright protected inputted through the recording reservation inputting section for performing a move process of the contents to a designated move destination apparatus. The same contents are sometimes owned by a plurality of apparatus on the network. Therefore, the contents moving section may select, from among two or more of those apparatus which own object contents, an apparatus having a high surplus processing capacity as a contents move source apparatus.

For example, digital broadcasting contents obliges the copy-once requirement. Therefore, the contents moving section deletes the object contents from the move source apparatus after the object contents are moved to the move destination apparatus.

When the total number of contents owned by those apparatus which cooperate with each other on the network decreases as a result of move of contents, the owned contents management section updates a display of the owned number of contents on the owned contents table screen.

According to another aspect of the present invention, there is provided a contents processing method wherein a plurality of apparatus having a recording reservation function cooperate with each other on a network to perform a process conforming to copyright for broadcast contents, including a recording reservation inputting step, performed by a user, of designating a broadcasting program to be reserved for recording and a recording quantity of the broadcasting program, a recording reservation setting step, performed in response to a recording reservation inputted at the recording reservation inputting step, of specifying, from among those of the apparatus which cooperate with each other on the network, those apparatus to which the recording reservation should be set, and an owned contents management step of managing contents recorded and owned by the apparatus which cooperate with each other on the network.

According to a further aspect of the present invention, there is provided a computer program described in a computer-readable form for causing a plurality of apparatus having a recording reservation function to cooperate with each other on a network to execute a process copyright protected for broadcast contents on a computer system, including a recording reservation inputting step, performed by a user, of designating a broadcasting program to be reserved for recording and a recording quantity of the broadcasting program, a recording reservation setting step, performed in response to a recording reservation inputted at the recording reservation inputting step, of specifying, from among those of the apparatus which cooperate with each other on the network, those apparatus to which the recording reservation should be set, and an owned contents management step of managing contents recorded and owned by the apparatus which cooperate with each other on the network.

The computer program of the present invention defines a computer program described in a computer-readable form so that a predetermined process may be implemented on a computer system. In other words, where the computer program is installed into a computer system, cooperative operation is exhibited on the computer program, and advantages similar to those provided by the information processing system of the present invention can be achieved.

In summary, with the contents processing system and method and the computer program, it is possible to suitably record contents copyright protected to which a contents protection requirement such as the copy-once requirement is set.

Further, with the contents processing system and method and the computer program, it is possible to suitably record contents copyright protected in such a manner as to be owned by a plurality of apparatus.

Furthermore, with the contents processing system and method and the computer program, it is possible to cause a plurality of apparatus in a home such as CE apparatus and mobile apparatus to own copy-once contents through operations similar to those required conventionally for recording. When the user moves copy-once contents, the moving operation can be performed by an amount of operation similar to that required conventionally for copying of analog contents.

The above and other objects, features and advantages of the present invention will become apparent from the following description and the appended claims, taken in conjunction with the accompanying drawings in which like parts or elements denoted by like reference symbols.

### BRIEF DESCRIPTION OF THE DRAWINGS

FIG. 1 is a block diagram showing a configuration of a network system to which the present invention is applied;
FIGS. 2A, 2B and 2C are views illustrating an accessing procedure from a sub processor to a main memory in the network system of FIG. 1;
FIG. 3 is a view showing an example of a configuration of a software cell;
FIG. 4 is a view illustrating a data area of a software cell where a DMA command is a status returning command;
FIG. 5 is a diagrammatic view showing a plurality of information processing apparatus in a manner wherein they operate as a virtual single information processing apparatus;
FIG. 6 is a diagrammatic view illustrating an example of a software configuration of an information processing controller;
FIG. 7 is a diagrammatic view showing four information processing apparatus in a manner wherein they operate as a virtual single information processing apparatus;
FIG. 8 is a diagrammatic view illustrating an example of distributed processing by the system shown in FIG. 7;
FIG. 9 is a diagrammatic view showing a particular example of information processing apparatus and a system;
FIG. 10 is a block diagram showing a hardware configuration of a hard disk recorder shown in FIG. 9;
FIG. 11 is a diagrammatic view showing a software configuration of the hard disk recorder shown in FIG. 9;
FIG. 12 is a block diagram showing a hardware configuration of a PDA shown in FIG. 9;
FIG. 13 is a diagrammatic view showing a software configuration of the PDA shown in FIG. 9;
FIG. 14 is a block diagram showing a hardware configuration of a portable CD player shown in FIG. 9;
FIG. 15 is a diagrammatic view showing a software configuration of the portable CD player shown in FIG. 9;
FIG. 16 is a schematic view showing a configuration of another network system to which the present invention is applied;
FIG. 17 is a schematic view showing an information processing apparatus having a liquid crystal display section or an LED indicator disposed on a front face thereof;
FIG. 18 is a view showing an example of a configuration of a GUI recording reservation setting screen on which recording reservation program information is illustrated in the form of a line;
FIGS. 19 and 20 are schematic views showing different examples of a configuration of a GUI recording reservation setting screen on which recording reservation program information is indicated in the form of a calendar;
FIG. 21 is a flow chart illustrating a processing procedure when, in a network environment wherein a plurality of information processing apparatus having a recording reservation function are connected to each other, a user sets a recording reservation of a broadcasting program on a particular one of the information processing apparatus;
FIG. 22 is a sequence diagram illustrating an operation sequence when a user performs a recording reservation setting operation on a cooperating side information processing apparatus on the network;
FIG. 23 is a view showing an example of a configuration of a setting screen for performing manual setting of a recording object apparatus and individual apparatus setting of a recording mode;
FIG. 24 is a flow chart illustrating a processing procedure for selecting one of information processing apparatus depending upon recording reservation conditions;
FIG. 25 is a view showing a software cell configuration of a recording reservation information request command used for setting of a recording reservation on an information processing apparatus on the cooperating side on a network;
FIG. 26 is a view showing a software cell configuration of a recording reservation information response command used for setting of a recording reservation on an information processing apparatus on the cooperating side on a network;
FIG. 27 is a view illustrating a configuration of all recording reservation program information included in data as recording reservation information;
FIG. 28 is a view illustrating a configuration of apparatus information included in data as recording reservation information;
FIG. 29 is a view illustrating a configuration of utilization statistics information included in data as recording reservation information;
FIG. 30 is a view showing a software cell configuration of a recording reservation setting request command used for setting of recording reservation on an information processing apparatus on the cooperating side on a network;
FIG. 31 is a view illustrating a configuration of recording reservation setting program information included as data in a recording reservation setting request command;
FIG. 32 is a view showing a software cell configuration of a recording reservation setting response command used for setting of a recording reservation on an information processing apparatus on the cooperating side on a network;
FIG. 33 is a view showing an example of a configuration of a table screen of owned contents;
FIG. 34 is a flow diagram illustrating an operation sequence for reproducing owned contents;
FIG. 35 is a view illustrating a configuration of a data area of a contents reproduction request command;
FIG. 36 is a view showing an example of a configuration of a contents move screen;
FIG. 37 is a flow diagram illustrating an operation sequence upon contents move;
FIG. 38 is a view illustrating an example of a configuration of a data area of a contents move request command; and
FIGS. 39 to 41 are views showing owned contents table screens after a contents move process.

### DETAILED DESCRIPTION OF THE PREFERRED EMBODIMENTS

### A. System Configuration

The present invention allows two or more information processing apparatus set at different places from each other to be linked in operation with each other through a home network to achieve simplified, easy and efficient reservation recording operation on the apparatus. In order to allow the apparatus on the network to cooperate with each other, the present invention makes use of a grid computing technique for achieving a high arithmetic operation performance through cooperation of the apparatus.

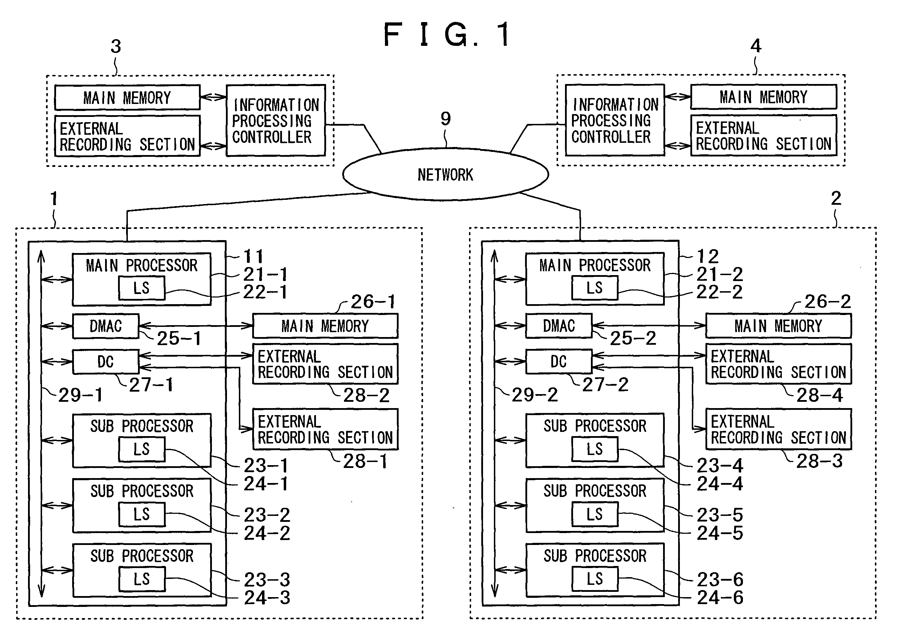

FIG. 1 schematically shows a configuration of a network system formed applying the grid computing.

The network may be formed from the Internet or some other wide area network and a private network such as a LAN (Local Area Network) or a home network which is connected to the wide area network through a gateway or the like. The home network may be physically formed from a standard network interface such as a 10 Base T interface, a 100 Base TX interface, or a Giga eather interface. Further, as a mechanism for discovering another apparatus on the home network, the Upnp (Universal Plug and Play) can be utilized. According to the Upnp, a definition file described in the XML (extended Markup Language) form is exchanged between different apparatus connected to each other by a network, and mutual authentication is performed through an addressing process, a discovery process, and a service request process. Such mutual authentication can be achieved also by broadcasting of a packet that describes prescribed apparatus information within the same segment.

A plurality of information processing apparatus are connected on the network. The information processing apparatus may include an AV apparatus such as a DVD recorder or an HD recorder which incorporates a recording medium and has a reservation recording function, an AV apparatus for exclusive use for reproduction such as a compact disk player which does not have a recording function, and other information processing apparatus. The information processing apparatus may further include a computer processing system such as a PDA or a personal computer. In the example shown in FIG. 1, a plurality of information processing apparatus 1, 2, 3 and 4 are connected to each other through a network 9.

### A-1. Information Processing Apparatus and Information Processing Controller

The information processing apparatus 1, 2, 3, and 4 typically are various AV (Audio and Visual) apparatus and portable apparatus hereinafter described.

The information processing apparatus 1 includes an information processing controller 11 as a computer function section. The information processing controller 11 includes a main processor 21-1, sub processors 23-1, 23-2, and 23-3, a direct memory access controller (DMAC) 25-1, and a disk controller (DC) 27-1. The information processing controller 11 is preferably formed as a one-chip IC (Integrated Circuit).

The main processor 21-1 performs schedule management of program execution (data processing) by the sub processors 23-1, 23-2, and 23-3 and general management of the information processing controller 11 (information processing apparatus 1). However, the main processor 21-1 may be configured otherwise such that a program other than the program for performing the management operates in the main processor 21-1. In this instance, the main processor 21-1 functions also as a sub processor. The main processor 21-1 includes a local storage (LS) 22-1.

Although each information processing apparatus may include a single sub processor, preferably it includes a plurality of sub processors. In the example shown in FIG. 1, each of the information processing apparatus 1, 2, 3, and 4 includes a plurality sub processors. The sub processors 23-1, 23-2, and 23-3 execute programs parallelly and independently of each other to process data under the control of the main processor 21-1. Further, according to circumstances, a program in the main processor 21-1 can operate in cooperation with a program in any of the sub processors 23-1, 23-2, and 23-3. Also the sub processors 23-1, 23-2, and 23-3 include local storages 24-1, 24-2, and 24-3, respectively.

The direct memory access controller 25-1 accesses programs and data stored in a main memory 26-1 connected to the information processing controller 11 and formed from a DRAM (dynamic RAM) or the like without intervention of a processor. The disk controller 27-1 controls an accessing operation to external recording sections 28-1 and 28-2 connected to the information processing controller 11.

The external recording sections 28-1 and 28-2 may have a form of any of a fixed disk (hard disk) and a removable disk. As such a removable disk as just mentioned, various recording media such as an MO (magnetic disk), an optical disk such as a CD±RW or a DVD±RW, a memory disk, an SRAM (static RAM), and a ROM can be used. The disk controller 27-1 is an external recording section controller although it is called disk controller. The information processing controller 11 can be configured such that a plurality of external recording sections 28 are connected thereto as seen in FIG. 1.

The main processor 21-1, sub processors 23-1, 23-2, and 23-3, direct memory access controller 25-1, and disk controller 27-1 are connected to each other by a bus 29-1.

An identifier is allocated as an information processing apparatus ID to the information processing controller 11. The identifier can identify the information processing apparatus 1, which incorporates the information processing controller 11, uniquely over the entire network. Also to each of the main processor 21-1 and the sub processors 23-1, 23-2, and 23-3, an identifier with which it can be identified is allocated as a main processor ID or a sub processor ID similarly.

Also the other information processing apparatus 2, 3, and 4 are configured in a similar manner, and therefore, overlapping description of them is omitted herein to avoid redundancy. Here, it is to be noticed that those units of reference characters having the same parent number operate similarly unless otherwise specified even if they have different branch numbers. Thus, in the following description, where the branch number of reference characters is omitted, the units are same irrespective of the difference in branch number.

### A-2. Accessing from Each Sub Processor to the Main Memory

As described hereinabove, although each of the sub processors 23 in one information processing controller executes a program independently to process data, if different sub processors perform reading out or writing at a time from or into same areas in the main memories 26, then mismatching of data may possibly occur. Therefore, accessing from the sub processors 23 to the main memories 26 is performed in accordance with the following procedure.

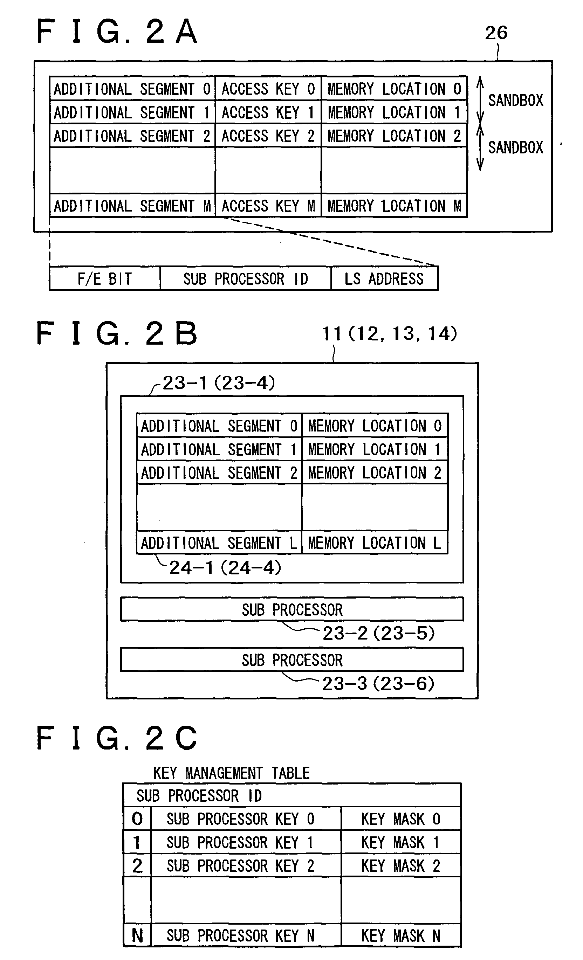

FIG. 2A illustrates locations in the main memory 26. As seen in FIG. 2A, the main memory 26 is formed from memory locations with which a plurality of addresses can be designated, and an additional segment for storing information indicative of a state of data is allocated to each memory location. The additional segment includes an F/E bit, a sub processor ID, and an LS address (Local Storage address). Also an access key hereinafter described is allocated to each memory location. The F/E bit is defined in the following manner.

The F/E bit = 0 represents that the data in the corresponding memory location is data being read and processed by a sub processor 23 or invalid data which it not the latest data since the location is in a blank state and is disabled from being read out. Further, the F/E bit = 0 indicates that data can be written into the corresponding memory location, and the F/E bit is set to 1 after writing into the memory location.

The F/E bit = 1 represents that data of the corresponding memory location is not read out by any sub processor 23 and is the latest data not processed as yet. The data of the memory location can be read out. After the sub processor 23 read out the data, the F/E bit is set to 0. Further, the F/E bit = 1 represents that the memory location is disabled from writing of data.

Further, in the state of the F/E bit = 0 (readout disabled/writing enabled), it is possible to set a readout reservation with regard to the memory location. When readout reservation is to be performed with regard to a memory location with regard to which the F/E bit = 0, a sub processor 23 writes the sub processor ID and the LS address of the sub processor 23 as readout reservation information into the additional segment of the memory location with regard to which the readout reservation is performed.

Thereafter, the sub processor 23 on the data writing side writes the data into the memory location having the readout reservation, and the F/E bit is set to F/E bit = 1 (readout enabled/writing disabled). Then, the sub processor ID and the LS address written as the readout reservation information in the additional segment in advance are read out.

Where there is the necessity to process data at multiple stages using a plurality of sub processors, if readout/writing of data of each memory location are controlled in such a manner as described above, then immediately after data processed by a processor 23, which performs a process at a preceding stage, is written into a predetermined address on the main memory 26, another sub processor 23, which performs a process at a succeeding stage, can read out the pre-processed data.

FIG. 2B illustrates memory locations of a local storage 24 in each sub processor 23. Referring to FIG. 2B, also the local storage 24 in each sub processor 23 is formed from memory locations with which a plurality of addresses can be designated. An additional segment is allocated similarly to each of the memory locations. The additional segment includes a busy bit.

When the sub processor 23 is to read out data in the main memory 26 into a memory location of the local storage 24 thereof, it sets the corresponding busy bit to 1 to make reservation. Other data cannot be stored into any memory location with regard to which the busy bit is 1. After reading out of the memory location of the local storage 24, the busy bit is changed to 0 so that the memory location can be used for an arbitrary object later.

Referring back to FIG. 2A, the main memory 26 connected to each information processing controller includes a plurality of sandboxes for defining areas in the main memory 26. While the main memory 26 is formed from a plurality of memory locations, a sandbox is a set of such memory locations. Each sandbox is allocated for each sub processor 23 and can be used exclusively by the pertaining sub processor. In other words, each of the sub processors 23 can use a sandbox allocated thereto but cannot access data exceeding the area of the sandbox.

Further, in order to implement exclusive control of the main memory 26, such a key management table as shown in FIG. 2C is used. The key management table is stored in a comparatively high speed memory such as an SRAM in the information processing controller and is coordinated with a direct memory access controller 25. Each entry in the key management table includes a sub processor ID, a sub processor key, and a key mask.

The process when the sub processor 23 uses the main memory 26 is such as described below. First, the sub processor 23 outputs a readout or writing command to the direct memory access controller 25. This command includes the sub processor ID of the sub processor and an address of the main memory 26, which is a destination of the request for use.

Before the direct memory access controller 25 executes this command, it refers to the key management table to detect the sub processor key of the sub processor of the source of the request for use. Then, the direct memory access controller 25 compares the detected sub processor key of the source of the request for use with the access key allocated to the memory location shown in FIG. 2A in the main memory 26, which is the destination of the request for use. Then, only when the keys coincide with each other, the direct memory access controller 25 executes the command described above.

The key mask on the key management table shown in FIG. 2C can set, when an arbitrary bit thereof is set to the value 1, a corresponding bit of the sub processor key coordinated with the key mask to 0 or 1.

It is assumed that, for example, the sub processor key is 1010. Usually, the sub processor key enables accessing only to a sandbox having the access key of 1010. However, if the key mask coordinated with the sub processor key is set to 0001, then the coincidence determination between a sub processor key and an access key is masked only with regard to the digit in which the bit of the key mask is set to 1. Consequently, the sub processor key of 1010 enables accessing to a sandbox having the access key of 1010 or 1011.

The exclusive property of the sandboxes of the main memory 26 is implemented in such a manner as described above. In short, where there is the necessity for a plurality of sub processors in an information processing controller to process data at multiple stages, only a sub processor performing a process at a preceding stage and another sub processor performing a process at a succeeding stage are permitted to access a predetermined address of the main memory 26. Consequently, the data can be protected.

Such exclusive control of the memory can be used, for example, in the following manner. First, immediately after the information processing apparatus is started, the values of the key masks are all zero. It is assumed that a program in the main processor is executed and operates in a cooperating relationship with programs in the sub processors. When it is intended to store processing result data outputted from a first sub processor once into the main memory and then input the processing result data to a second sub processor, it is necessary that the pertaining main memory area can be accessed from the two sub processors. In such an instance, the program in the main processor changes the values of the key masks suitably to provide a main memory area, which can be accessed from the plurality of sub processors, to allow multi-stage processing by the sub-processors.

More particularly, when multi-stage processing is to be performed in the process of data from a different information processing apparatus → processing by the first sub processor → first main memory area → processing by the second sub processor → second main memory area, the second processor cannot access the first main memory area if the following settings are maintained:
Sub processor key of the first sub processor, 0100;
Access key of the first main memory area, 0100;
Sub processor key of the second sub processor, 0101;

Access key of the second main memory area, 0101.

Thus, if the key mask of the second sub processor is changed to 0001, then the second sub processor is permitted to access the first main memory area.

### A-3. Production and Configuration of a Software Cell

In the network system of FIG. 1, a software cell is transmitted between the information processing apparatus 1, 2, 3, and 4 so that distributed processing may be performed by the information processing apparatus 1, 2, 3, and 4. In particular, the main processor 21 included in the information processing controller in a certain information processing apparatus produces a software cell including a command, a program, and data and transmits the software cell to another information processing apparatus through the network 9 to achieve distribution of processing.

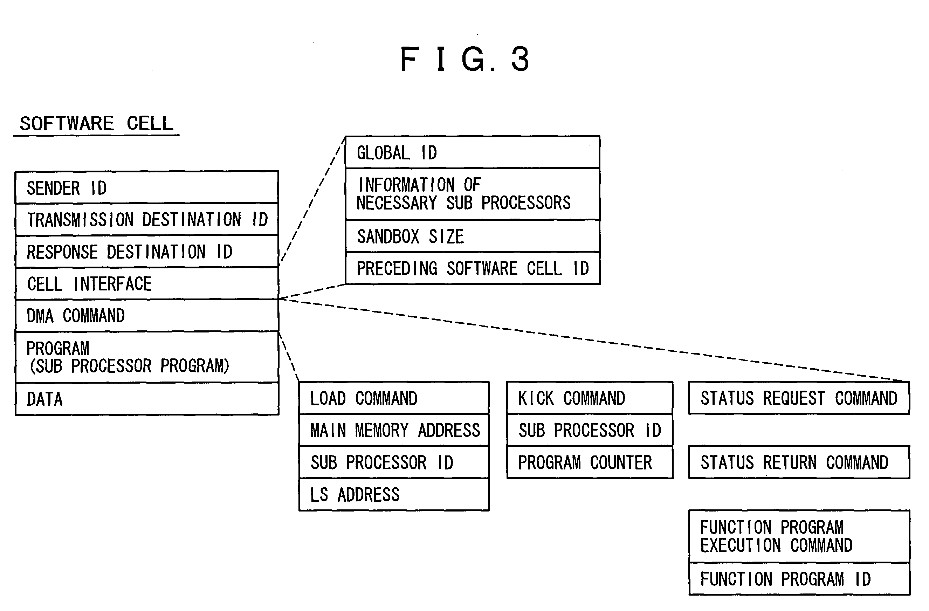

FIG. 3 shows an example of a configuration of a software cell. Referring to FIG. 3, the software cell shown includes a sender ID, a transmission destination ID, a response destination ID, a cell interface, a DMA command, a program, and data.

The sender ID includes a network address of an information processing apparatus of the sender of the software cell and the information processing apparatus ID of the information processing controller in the information processing apparatus. The sender ID includes identifiers (main processor ID and sub processor IDs) of the main processor 21 and the sub processors 23 included in the information processing controller in the information processing apparatus.

The sender ID and the response destination ID individually include the same information regarding an information processing apparatus of the transmission destination of the software cell and an information processing apparatus of the response destination of a result of execution of the software cell.

The cell interface is information necessary for utilization of the software cell and includes a global ID, information of necessary sub processors, a sandbox size, and a preceding software cell ID.

The global ID allows unique identification of the software cell through the entire network and is produced based on the sender ID and the date and hour of production or transmission of the software cell.

The information of necessary sub processors has set therein the number of sub processors necessary for execution of the software cell. The sandbox side has set therein the memory capacities in the main memory 26 and the local storages 24 of the sub processors 23 necessary for execution of the software cell.

The preceding software cell ID is an identifier of a preceding software cell among software cells of one group, which requires sequential execution such as streaming data.

An execution section of a software cell is formed from the DMA command, program, and data. The DMA command includes a series of DMA commands necessary to start the program, and the program includes sub processor programs to be executed by the sub processors 23. The data here is data to be processed by the program including the sub processor programs.

The DMA command further includes a load command, a kick command, a function program execution command, a status request command, and a status return command.

The load command is a command for loading information in the main memory 26 into the local storage 24 of a sub processor 23 and includes, in addition to the load command itself, a main memory address, a sub processor ID, and an LS (Local Storage) address. The main memory address indicates an address of a predetermined area in the main memory 26, which is a load source of the information. The sub process ID and the LS address indicate the identifier and the address of the local storage 24 of the sub processor 23 of a load destination of the information.

The kick command is a command for starting execution of a program and includes, in addition to the kick command, a sub processor ID and a program counter. The sub processor ID identifies a sub processor 23 of a kicking object, and the program counter provides an address for the program counter for execution of the program.

The function program execution command is a command (hereinafter described) used for a certain information processing apparatus to request another information processing apparatus for execution of a function program. The information processing controller in the information processing apparatus, which receives the function program execution command, identifies a function program to be started from a function program ID (hereinafter described).

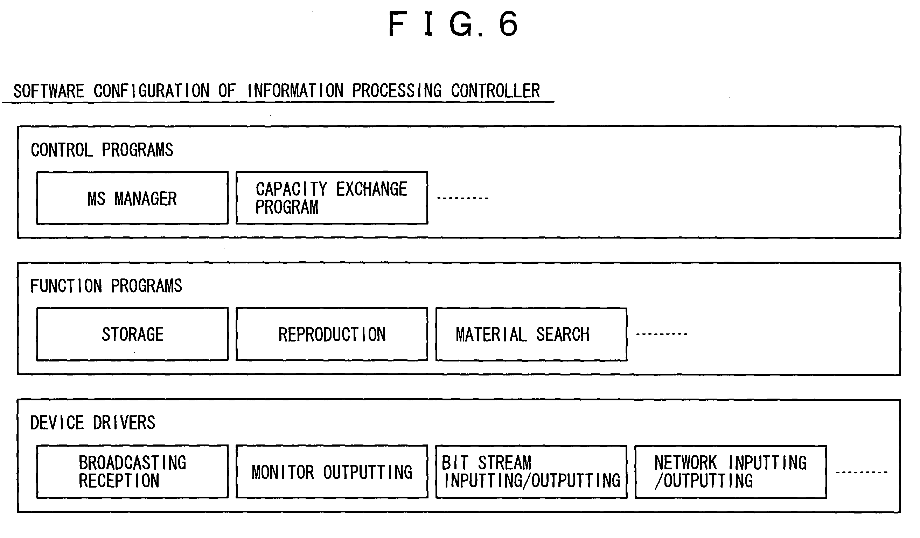

The status request command is a command for requesting for transmission of apparatus information regarding a current operation state (situation) of an information processing apparatus indicated by the transmission destination ID to an information processing apparatus indicated by the response destination ID. While the function program is hereinafter described, it is a program categorized into a function program in FIG. 6, which illustrates a configuration of software stored in the main memory 26. The function program is loaded into the main memory 26 and executed by the main processor 21.

The status return command is a command used for an information processing apparatus, which receives the status request command, to issue a response of apparatus information of the information processing apparatus itself to an information processing apparatus indicated by the response destination ID included in the status request command.

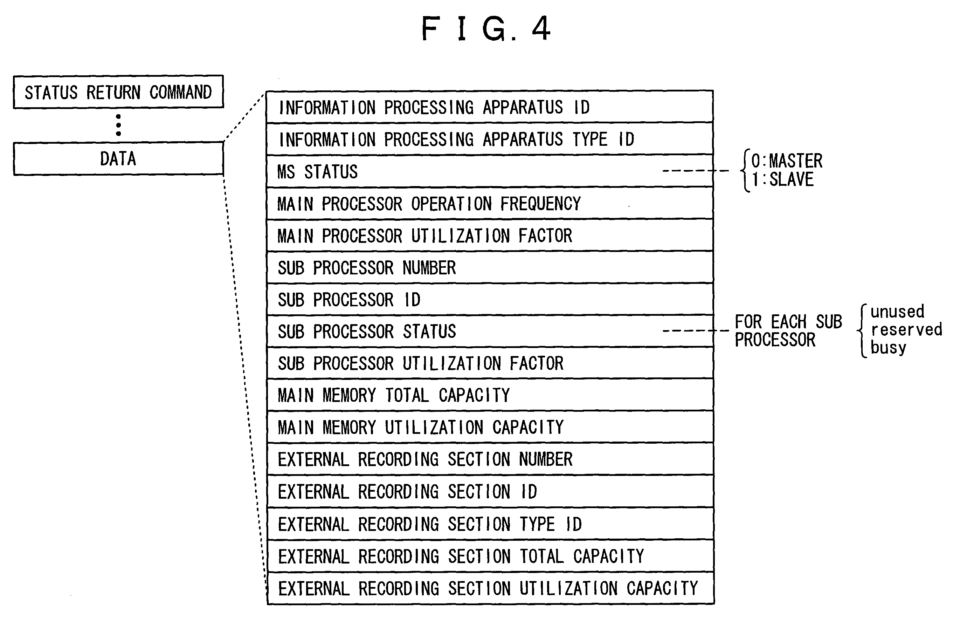

FIG. 4 illustrates a structure of the data area of a software cell where the DMA command is the status return command.

Referring to FIG. 4, the information processing apparatus ID is an identifier for identifying an information processing apparatus, which includes an information processing controller, and represents the ID of an information processing apparatus that transmits the status return command. The information processing apparatus ID is produced, when the power supply is made available, based on the date and hour when the power supply is made available, the network address of the information processing apparatus, the number of sub processors 23 included in the information processing controller in the information processing apparatus, and so forth by the main processor 21 included in the information processing controller in the information processing apparatus.

The information processing apparatus type ID includes a value representative of a characteristic of the information processing apparatus. The characteristic of the information processing apparatus here is, for example, a hard disk recorder (hereinafter described), a PDA (Personal Digital Assistant), a portable CD (Compact Disc) player, or the like. The information processing apparatus type ID may be of the type representing a function that the information processing apparatus has such as image and sound recording or image and sound reproduction. The value representative of a characteristic or a function of an information processing apparatus is determined in advance. If the information processing apparatus type ID is recalled, then a characteristic or a function of the information processing apparatus can be grasped.

The MS (Master/Slave) status represents which one of a master apparatus and a slave apparatus operates the information processing apparatus as hereinafter described. Where the MS status is set to 0, this represents that the information processing apparatus should operate as a master apparatus, but where the MS status is set to 1, this represents that the information processing apparatus should operate as a slave apparatus.

The main processor operation frequency represents an operation frequency of the main processor 21 in the information processing controller. The main processor utilization factor represents the utilization factor in the main processor 21 regarding all programs which are operating in the main processor 21 at present. The main processor utilization factor is a value representing the ratio of the processing capacity being currently used to the overall processing capacity of the object main processor and is calculated, for example, in a unit of MIPS [Million Instructions Per Second] which is a unit for evaluation of the processor processing capacity or based on the processor utilization time per unit time. This similarly applies also to a sub processor utilization factor hereinafter described.

The sub processor number represents the number of sub processors 23 provided in the information processing controller. The sub processor ID represents an identifier for identification of a sub processor 23 in the information processing controller.

The sub processor status represents a status of the sub processor 23 and may be one of an unused status, a reserved status, a busy status, and so forth. The unused status indicates that the sub processor is not used at present and is not reserved for use either. The reserved status indicates that the sub processor is not used but is reserved for use. The busy status indicates that the sub processor is currently used.

The sub processor utilization factor represents the utilization factor in the sub processor regarding a program being executed by the sub processor or being reserved for execution in the sub processor. In other words, the sub processor utilization factor indicates the utilization factor at present where the sub processor status is busy, but indicates an estimated utilization factor with which the sub processor is planned to be used later where the sub processor status is reserved.

One set of the sub processor ID, sub processor status, and sub processor utilization factor is set for one sub processor 23. Consequently, a number of sets corresponding to the number of sub processors 23 in one information processing controller are set.

The main memory total capacity and the main memory utilization capacity represent the total capacity and the capacity being currently used of the main memory 26 connected to the information processing controller, respectively.

The external recording section number represents the number of external recording sections 28 connected to the information processing controller. The external recording section ID is information for unique identification of each of the external recording sections 28 connected to the information processing controller. The external recording section type ID represents the type of each of the external recording sections 28 (for example, a hard disk, a CD±RW, a DVD±RW, a memory disk, an SRAM, a ROM, or the like).

The external recording section total capacity and the external recording section utilization capacity represent the total capacity and the currently used capacity of an external recording section 28 identified with the external recording section ID, respectively.

A set of the external recording section ID, external recording section type ID, external recording section total capacity, and external recording section utilization capacity is set for one external recording section 28. Consequently, a number of sets corresponding to the number of external recording sections 28 connected to the information processing controller are set. In particular, where a plurality of external recording sections are connected to an information processing controller, different external recording section IDs are applied individually to the external recording sections, and also the external recording section type IDs, external recording section total capacities, and external recording section utilization capacities are managed separately from each other.

### A-4. Execution of a Software Cell

The main processor 21 included in the information processing controller in a certain information processing apparatus produces a software cell having such a configuration as described above and transmits a different information processing apparatus and the information processing controller in the different information processing apparatus through the network 9. The information processing apparatus of the sender, the information processing apparatus of the transmission destination, the information processing apparatus of the response destination, and the information processing controllers in the apparatus mentioned are individually identified with the sender ID, transmission destination ID, and response destination ID described hereinabove, respectively.

The main processor 21 included in the information processing controller in the information processing apparatus receiving the software cell stores the software cell into the main memory 26. Further, the main processor 21 of the transmission destination reads out the software cell and processes the DMA command included in the software cell.

In particular, the main processor 21 of the transmission destination first executes the load command. Consequently, the information is loaded from the main address indicated by the load command into a predetermined area of the local storage 24 in a sub processor specified by the sub processor ID and the LS address included in the load command. The information loaded here is a sub processor program or data or some other indicated data included in the received software cell.

Then, the main processor 21 outputs the kick command to a sub processor indicated by the sub processor ID included in the kick command together with a program counter included in the kick command similarly.

The indicated sub processor executes the sub processor program in accordance with the kick command and the program counter. Then, the sub processor stores a result of the execution into the main memory 26, and then notifies the main processor 21 of completion of the execution.

It is to be noted that the processor executing the software cell in the information processing controller in the information processing apparatus of the transmission destination is not limited to a sub processor 23, but it is possible to designate the main processor 21 so as to execute a main memory program such as a function program included in the software cell.

In this instance, the information processing apparatus of the sender transmits, to the information processing apparatus of the transmission destination, a software cell whose DMA command is the load command. The software cell includes a main memory program and data to be processed by the main memory program in place of the sub processor program. The main memory program and the data to be processed by the main memory program are stored into the main memory 26.

Then, the information processing apparatus of the sender transmits, to the information processing apparatus of the transmission destination, a software cell whose DMA command is the kick command or the function program execution command. The software cell includes the main processor ID and main memory address of the information processing controller in the information processing apparatus of the transmission destination, an identifier for identification of the main memory program such as a function program ID hereinafter described, and a program counter. Thus, the main processor 21 may execute the main memory program.

As described above, in the network system according to the present embodiment, an information processing apparatus of the sender transmits a sub processor program or a main memory program in the form of a software cell to an information processing apparatus of the transmission destination. Further, the information processing apparatus of the sender causes the information processing controller in the information processing apparatus of the transmission destination to load the sub processor program into a sub processor 23. Consequently, the information processing apparatus of the sender can cause the information processing apparatus of the transmission destination to execute the sub processor program or the main memory program.

Where the program included in the received software cell is a sub processor program, the information processing controller in the information processing apparatus of the transmission destination loads the sub processor program into a designated sub processor. Thus, the information processing controller causes the sub processor to execute the sub processor program or the main memory program included in the software cell.

Accordingly, even if the user does not operate the information processing apparatus of the transmission destination, the sub processor program or the main memory program can be executed automatically by the information processing controller in the information processing apparatus of the transmission destination.

In this manner, any information processing apparatus can acquire, where the information processing controller thereof does not include a sub processor program or a main memory program such as a function program, such programs from anther information processing apparatus connected thereto by the network. Further, different sub processors can transfer data therebetween in accordance with the DMA system and such sandboxes as described hereinabove are used. In such a case, even where it is necessary to process data at multiple states within one information processing controller, the processing can be executed at a high speed and with a high degree of security.

### A-5. Distributed Processing of the Network System

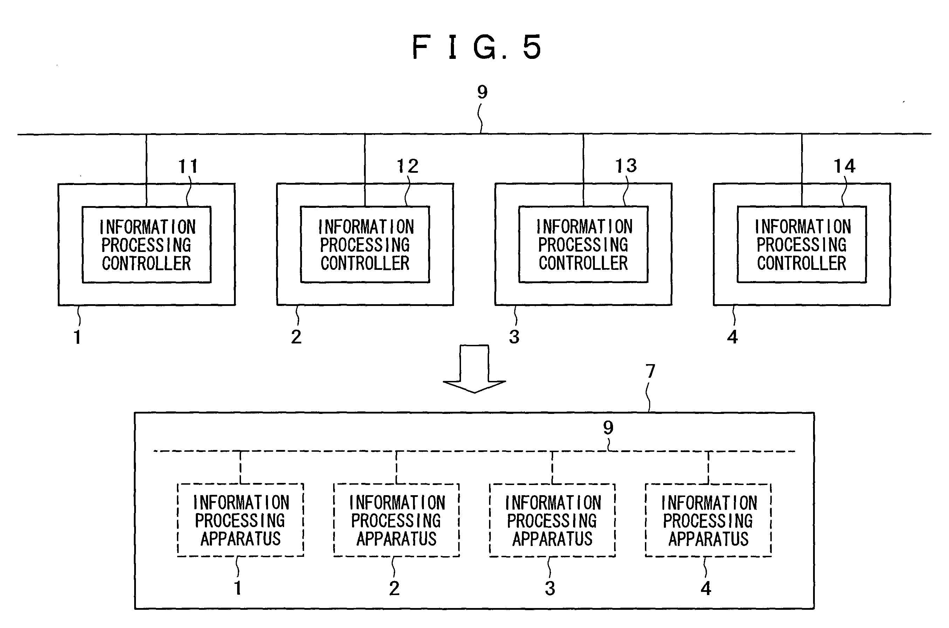

FIG. 5 illustrates a manner wherein a plurality of information processing apparatus operate as a virtual single information processing apparatus. As a result of the distributed processing through use of a software cell, the plural information processing apparatus 1, 2, 3, and 4 connected to the network 9 as seen at the upper stage in FIG. 5 operate as a virtual single information processing apparatus 7 as seen at the lower stage in FIG. 5. However, in order to implement such virtual operation as just described, processes described below must be executed.

### A-6. Software Configuration of the System and Loading of a Program

FIG. 6 illustrates a configuration of software to be stored by the main memories 26 of the individual information processing controllers. Referring to FIG. 6, the pieces of software (programs) are recorded in an external recording section 28 connected to the information processing controller before the power supply is made available to the information processing apparatus. The programs are classified, depending upon the function or characteristic thereof, into control programs, function programs, and device drivers.

The control programs are provided commonly in the information processing controllers and executed by the main processor 21 in each of the information processing controllers. The control programs include an MS (Master/Slave) manager and a capacity exchange program hereinafter described.

The main processors 21 execute the function programs, and for each information processing apparatus, such function programs as a recording program, a reproduction program, a material search program, and so forth are provided for the information processing controller.

The device drivers are provided for inputting and outputting (transmission and reception) of each information processing controller (information processing apparatus), and such devices as those for broadcast reception, monitor outputting, bit stream inputting/outputting, network inputting/outputting, and so forth, which are suitable for each of the information processing apparatus, are provided for the information processing controller.

When the power supply is made available to an information processing apparatus in a state wherein the information processing apparatus is physically connected to the network 9 by connection of a cable or the like and consequently the information processing apparatus is connected to the network 9 also electrically and functionally, the main processor 21 of the information processing controller of the information processing apparatus loads the programs belonging to the control programs and the programs belonging to the device drivers into the main memory 26.

As a loading procedure of the programs, the main processor 21 first controls the disk controller 27 to execute a reading out instruction to read out the programs from the external recording section 28 and then controls the direct memory access controller 25 to execute a writing instruction to write the programs into the main memory 26.

The programs belonging to the function programs may be handled such that only a necessary one of the programs is loaded when necessary or otherwise such that all of them are loaded immediately after the main power supply is made available similarly to the programs belonging to the other categories.

The programs which belong to the function programs need not necessarily be recorded in the external recording sections 28 of all of the information processing apparatus connected to the network, but if they are recorded in an external recording section 28 of any one of the information processing apparatus, they can be loaded into the other information processing apparatus by the method described hereinabove. As a result, the function programs can be executed by the information processing apparatus 1, 2, 3 and 4 which act as a virtual single information processing apparatus 7 as shown at the lower stage of FIG. 5.

A function program processed by the main processor 21 sometimes operates cooperatively with a sub processor program processed by a sub processor 23 as described hereinabove. Therefore, where a sub processor program which operates cooperatively with a function program which makes an object when the main processor 21 reads out the function program from an external recording section 28 and writes the function program into the main memory 26 exists, also the sub processor program is written together with the function program into the same main memory 26. In this instance, the number of sub processor programs which operate cooperatively may be only one or a plural number. Where the number is a plural number, all of the sub processor programs which operate cooperatively are written into the main memory 26. The sub processor program or programs written in the main memory 26 are thereafter written into the local storage 24 in the sub processor 23 and operate cooperatively with the function program processed by the main processor 21.

Further, a sub processor program ID is allocated to each of the sub processor programs so that each of the sub processor programs can be identified uniquely. The sub processor program ID to be allocated may be an identifier having some relationship with the function program ID of the function program which is the other party of the cooperative operation such as, for example, an identifier formed from the function program ID as a parent number and a branch number added to the tail end of the parent number, or an identifier having no relationship with the function program ID of the function program which is the other party of the cooperative operation. Anyway, where a function program and a sub processor program should operate cooperatively with each other, it is necessary for each of them to mutually retain the program ID of the identifier of the other party in the program itself. Also where a function program should operate cooperatively with a plurality of sub processor programs, it is necessary for the function program to retain the sub processor program IDs of all of the sub processor programs.

As described hereinabove in connection with the software cell shown in FIG. 3, an identifier, which can be identified uniquely, is allocated as a function program ID to each of the function programs. The function program ID is determined from the date and hour of production, the information processing apparatus ID, and so forth at a stage of production of the function program.

The main processor 21 secures, in the main memory 26, an area for storing apparatus information (information relating to an operation state) of the information processing apparatus in which the main processor 21 operates, and records the information as an apparatus information table of the information processing apparatus itself. The apparatus information here is information of the information processing apparatus ID and so forth in the data area of the status return command illustrated in FIG. 4.

### A-7. Determination of the Master/Slave in the System

In the network system described above, when the main power supply to a certain information processing apparatus is made available, the main processor 21 of the information processing controller of the information processing apparatus loads a master/slave manager (hereinafter referred to as MS manager) into the main memory 26 and executes the master/slave manager.

After the MS manager detects that the information processing apparatus in which the MS manager operates is connected to the network 9, it confirms presence of the other information processing apparatus connected to the same network 9. The "connection" or "presence" here represents that the information processing apparatus is connected to the network 9 not only physically but also electrically and functionally.

The information processing apparatus in which the MS manager itself operates is hereinafter referred to as self apparatus, and any other information processing apparatus is referred to as different apparatus. Also the term pertaining apparatus represents the pertaining information processing apparatus.

A method by which the MS manager confirms presence of a different information processing apparatus connected to the same network 9 is described in the following.

The MS manager produces a software cell that designates the status request command as the DMA command and designates the pertaining information processing apparatus as the sender ID and the response destination ID but does not specify the transmission destination ID. Then, the MS manager transmits the software cell to the network to which the pertaining information processing apparatus is connected, and sets a timer for network connection confirmation. The timeout time of the timer is, for example, 10 minutes.

If a different information processing apparatus is connected to the network system, then the different apparatus receives the software cell of the status request command and transmits a software cell whose DMA command is the status return command and which includes apparatus information of the self apparatus (different apparatus) as the data to an information processing apparatus which is specified by the response destination ID of the received software cell and has issued the status request command. The software cell of the status return command at least includes information for specifying the different apparatus (information processing apparatus ID, information regarding the main processor, information regarding a sub processor, or the line) and the MS status of the different apparatus.

The MS manager of the information processing apparatus, which has issued the status request command, supervises reception of a software cell of the status return command transmitted from the different apparatus on the network until timeout occurs with the timer for network connection confirmation. As a result, if the status return command representative of the MS status = 0 (master apparatus) is received, then the MS status in the apparatus information table of the self apparatus is set to 1. Consequently, the pertaining apparatus becomes a slave apparatus.

On the other hand, if no status return command is received within the time until timeout occurs with the timer for network connection confirmation, or if the status return command representative of the MS status = 0 (master apparatus) is not received, then the MS status in the apparatus information table of the self apparatus is set to 0. Consequently, the pertaining apparatus becomes a master apparatus.

In short, if a new information processing apparatus is connected to the network 9 in a state wherein no apparatus is connected to the network 9 or in another state wherein a master apparatus does not exist on the network 9, then the pertaining apparatus is automatically set as a master apparatus. On the other hand, if a new information processing apparatus is connected to the network 9 in a further state wherein a master apparatus exists already on the network 9, then the pertaining apparatus is automatically set as a slave apparatus.

In any of the master apparatus and slave apparatus, the MS manager periodically transmits the status request command to the different apparatus on the network 9 to inquire about the status information to supervise the situation of the different apparatus. As a result, when the connection state of the network 9 undergoes a variation such as when the main power supply to an information processing apparatus connected to the network 9 is cut or an information processing apparatus is disconnected from the network 9 and consequently the status return command is not returned from the particular different apparatus within a predetermined period of time set for the discrimination in advance, the information is conveyed to a capacity exchange program hereinafter described.

### A-8. Acquisition of Apparatus Information by the Master Apparatus and a Slave Apparatus

If the main processor 21 receives, from the MS manager, a notification of an inquiry about a different apparatus on the network 9 and completion of setting of the MS status of the self apparatus, then it executes a capacity exchange program.

The capacity exchange program acquires, if the self apparatus is a master apparatus, apparatus information of all of different information processing apparatus connected to the network 9, that is, apparatus information of each slave apparatus.

The acquisition of apparatus information of a different apparatus can be performed such that the DMA command produces and transmits a software cell of the status request command to the different apparatus and then receives a software cell whose DMA command is the status return command and includes apparatus information of the different apparatus as the data from the different apparatus.

The capacity exchange program secures an area for storing apparatus information of all different apparatus (all slave apparatus) connected to the network 9 in the main memory 26 of the self apparatus and stores the information as apparatus information tables of the different apparatus (slave apparatus) similarly to the apparatus information table of the self apparatus as the master apparatus. In other words, the apparatus information of all of the information processing apparatus connected to the network 9 including the self apparatus is stored as apparatus information tables in the main memory 26 of the master apparatus.

On the other hand, if the self apparatus of the capacity exchange program is a slave apparatus, then the capacity exchange program acquires the apparatus information of all of the different apparatus connected to the network 9, that is, the apparatus information of the master apparatus and all of the slave apparatus other than the self apparatus, and records the information processing apparatus IDs and the MS statuses included in the apparatus information into the main memory 26 of the self apparatus. In other words, in the main memory 26 of each slave apparatus, the apparatus information of the self apparatus is recorded as an apparatus information table, and the information processing apparatus IDs and the MS statuses of all of the master apparatus and the slave apparatus connected to the network 9 other than the self apparatus are recorded as different apparatus information tables.

Further, in any of the master apparatus and the slave apparatus, when the capacity exchange program receives a notification that an information processing apparatus is newly connected to the network 9 from the MS manager as described above, it acquires apparatus information of the information processing apparatus and registers the apparatus information into the main memory 26 as described hereinabove.

It is to be noted that the MS manager and the capacity exchange program may be executed not by the main processor 21 but by any sub processor 23. Further, the MS manager and the capacity exchange program preferably are resident programs that operate normally while the main power supply to the information processing apparatus is available.

### A-9. When an Information Processing Apparatus is Disconnected from the Network

In any of the master apparatus and the slave apparatus, if the capacity exchange program is notified from the MS manager that the main power supply to an information processing apparatus connected to the network 9 is disconnected or an information processing apparatus is disconnected from the network 9, it deletes the apparatus information table of the information processing apparatus from the main memory 26 of the self apparatus.

Further, if the information processing apparatus disconnected from the network 9 is the master apparatus, then another master apparatus is determined newly by the following method.

For example, each of those information processing apparatus that are not disconnected from the network 9 replaces the information processing apparatus IDs of the self apparatus and the different apparatus into numerical values and compares the information processing apparatus ID of the self apparatus with the information processing apparatus IDs of the different apparatus. If the information processing apparatus ID of the self apparatus exhibits the lowest value among the information processing apparatus that are not disconnected from the network 9, then the slave apparatus changes itself to the master apparatus and sets the MS status to zero. Then, it operates as the master apparatus and acquires and records the apparatus information of all of the different apparatus (slave apparatus) connected to the network 9 into the main memory 26 as described hereinabove.

### A-10. Distributed Processing Based on Apparatus Information

In order to allow a plurality of information processing apparatus 1, 2, 3, and 4 connected to the network 9 to operate as a virtual single information processing apparatus 7 as shown at the lower stage of FIG. 5, it is necessary for the master apparatus to grasp an operation of a user and operation states of the slave apparatus.

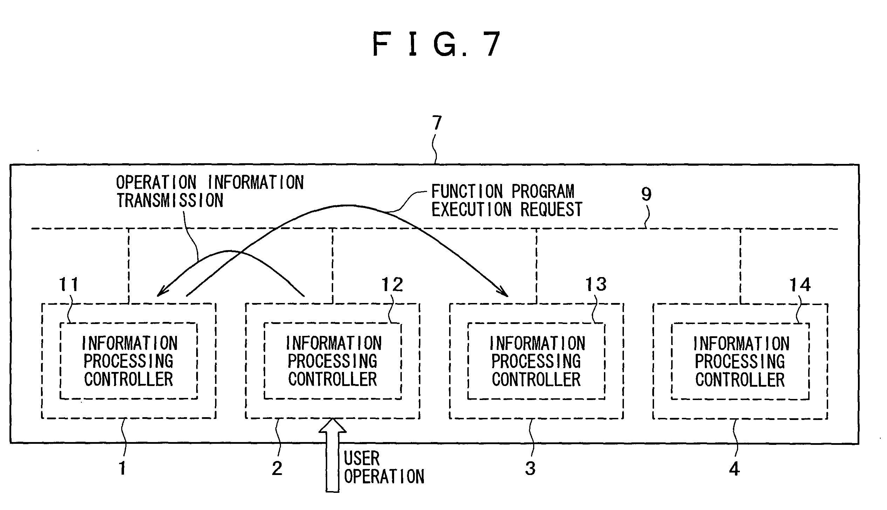

FIG. 7 shows four information processing apparatus in a state wherein they operate as a virtual single information processing apparatus 7. In the example shown, the information processing apparatus 1 acts as the master apparatus while the information processing apparatus 2, 3, and 4 act as slave apparatus A, B, and C, respectively.

When a user operates any of the information processing apparatus connected to the network 9, if the object of the operation is the master apparatus 1, then the operation information then is grasped directly by the master apparatus 1. On the other hand, if the object of the operation is a slave apparatus, then the operation information then is transmitted from the operated slave apparatus to the master apparatus 1. In other words, irrespective of whether the object of operation of the user is the master apparatus 1 or one of the slave apparatus, the master apparatus 1 always grasps the operation information. Transmission of the operation information is performed, for example, using a software cell whose DMA command is the operation information transmission command.

Then, the main processor 21-1 included in the information processing controller 11 in the master apparatus 1 selects a function program to be executed in accordance with the operation information. In this instance, if necessary, the main processor 21-1 included in the information processing controller 11 in the master apparatus 1 loads the function program from the external recording sections 28-1 and 28-2 of the self apparatus into the main memory 26-1 using the method described hereinabove. However, the function program may otherwise be transmitted from a different information processing apparatus (slave apparatus) to the master apparatus 1.

The function program defines required specifications regarding apparatus such as an information processing apparatus type ID, a processing capacity of the main processor or a sub processor, a main memory utilization capacity, and conditions relating to an external recording section (refer to FIG. 4).

The main processor 21-1 included in the information processing controller 11 in the master apparatus 1 reads out such requested specifications required by the individual function programs. Further, the main processor 21-1 refers to the apparatus information tables recorded in the main memory 26-1 by the capacity exchange program in advance to read out the apparatus information of the individual information processing apparatus. The apparatus information here signifies the items of information including the item of the information processing apparatus ID and the succeeding items illustrated in FIG. 4 and is information relating to the main processor, sub processors, main memory, and external recording sections.

The main processor 21-1 included in the information processing controller 11 in the master apparatus 1 successively compares the apparatus information of the information processing apparatus connected to the network 9 with the required specifications necessary for execution of the function program.

For example, if the function program requires a recording function, then the main processor 21-1 included in the information processing controller 11 in the information processing apparatus 1 specifies and extracts only those information processing apparatus, which have a recording function, based on the information processing apparatus type IDs. Further, the main processor 21-1 specifies that one of the slave apparatus that can assure the processing capacity of the main processor or a sub processor to execute the processing program, the main memory utilization capacity, and conditions regarding an external recording section as an execution request candidate apparatus. Here, if a plurality of execution request candidate apparatus are specified, then one of the execution request candidate apparatus is specified and selected.

After a slave apparatus to which an execution request is to be issued is specified, the main processor 21-1 included in the information processing controller 11 in the master apparatus 1 updates the apparatus information table with regard to the specified slave apparatus recorded in the main memory 26-1 included in the information processing controller 11 in the self apparatus.

Further, the main processor 21-1 included in the information processing controller 11 in the information processing apparatus 1 produces a software cell, which includes the load command and the kick command as the DMA commands, and sets information of a necessary sub processor and the sandbox size (refer to FIG. 3) regarding the function program to the cell interface of the software cell. Then, the main processor 21-1 transmits the resulting software cell to the slave apparatus, which is requested to execute the function program.

The slave apparatus requested to execute the function program executes the function program and updates the apparatus information table of the self apparatus. In this instance, if necessary, the main processor 21 included in the information processing controller in the slave apparatus loads the function program and a sub processor program or programs which should cooperate with the function program from an external recording section 28 of the self apparatus into the main memory 26 using the method described hereinabove.

The system may be configured such that, if the necessary function program or a sub processor program which should cooperate with the function program is not recorded in any of the external recording sections 28 of the slave apparatus requested to execute the function program, then a different information processing apparatus transmits the function program or sub processor program as the main memory program described hereinabove to the slave apparatus requested to execute the function program.

The sub processor program may otherwise be executed by a different information processing apparatus making use of the load command or kick command described hereinabove.

After the execution of the function program comes to an end, the main processor 21 included in the information processing controller in the slave apparatus having executed the function program transmits an execution end notification to the main processor 21-1 included in the information processing controller in the slave apparatus, and updates the apparatus information table of the self apparatus. The main processor 21-1 included in the information processing controller 11 in the master apparatus 1 receives the end notification and updates the apparatus information table of the slave apparatus having executed the function program.

The main processor 21-1 included in the information processing controller 11 in the master apparatus 1 may possibly select the self apparatus as an information processing apparatus, which can execute the function program, from a result of the reference to the apparatus information tables of the self apparatus and the different apparatus. In this instance, the master apparatus 1 executes the function program.

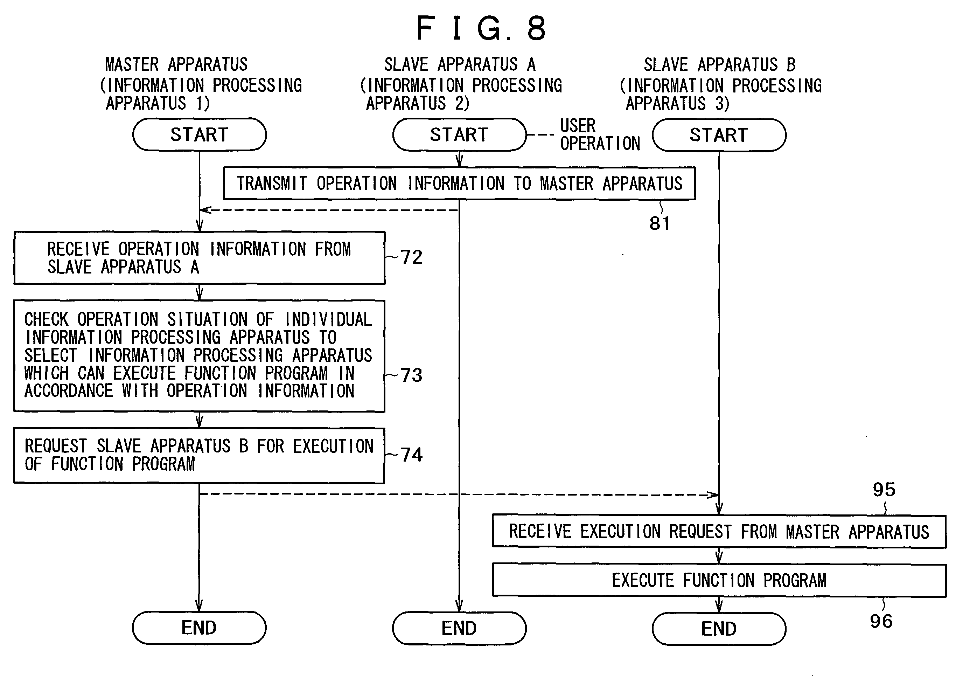

Distributed processing where a user operates, in the example illustrated in FIG. 7, the slave apparatus A (information processing apparatus 2) and the different slave apparatus B (information processing apparatus 3) executes a function program in response to the operation is described with reference to FIG. 8.

In the example illustrated in FIG. 8, when the user operates the slave apparatus A, distributed processing of the entire network system including the slave apparatus A is started, and the slave apparatus A first transmits operation information then to the master apparatus 1 (step 81).

The master apparatus 1 receives the operation information (step 72) and checks the operation states of the information processing apparatus from the apparatus information tables of the self apparatus and the different apparatus recorded in the main memory 26-1 of the self apparatus to select an information processing apparatus, which can execute a function program corresponding to the received operation information (step 73). In the example illustrated in FIG. 8, the slave apparatus B is selected.

Then, the master apparatus 1 issues a request for execution of the function program to the selected slave apparatus B (step 74).

The slave apparatus B receives the execution request (step 95) and executes the function program whose execution is requested (step 96).

In this manner, if a user operates only one of the information processing apparatus, then it can cause the plural information processing apparatus 1, 2, 3, and 4 to operate as a virtual single information processing apparatus 7 without operating any other one of the information processing apparatus.

### A-11. Particular Examples of the Information Processing Apparatus and the System

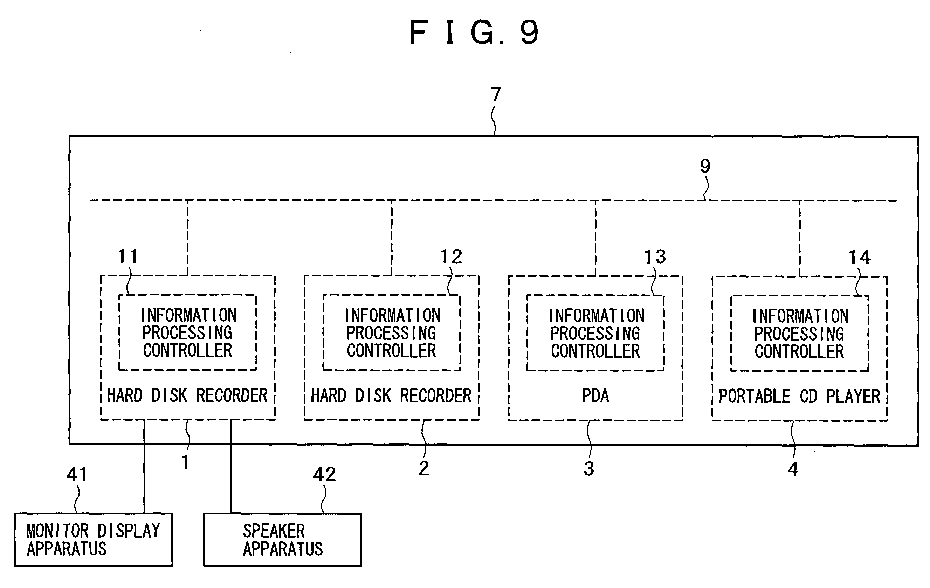

Each of the information processing apparatus 1, 2, 3 and 4 connected to each other through the network 9 may basically have any configuration only if information processing is performed by such an information processing controller 11, 12, 13 or 14 as described hereinabove. FIG. 9 shows an example of a configuration of the information processing apparatus.

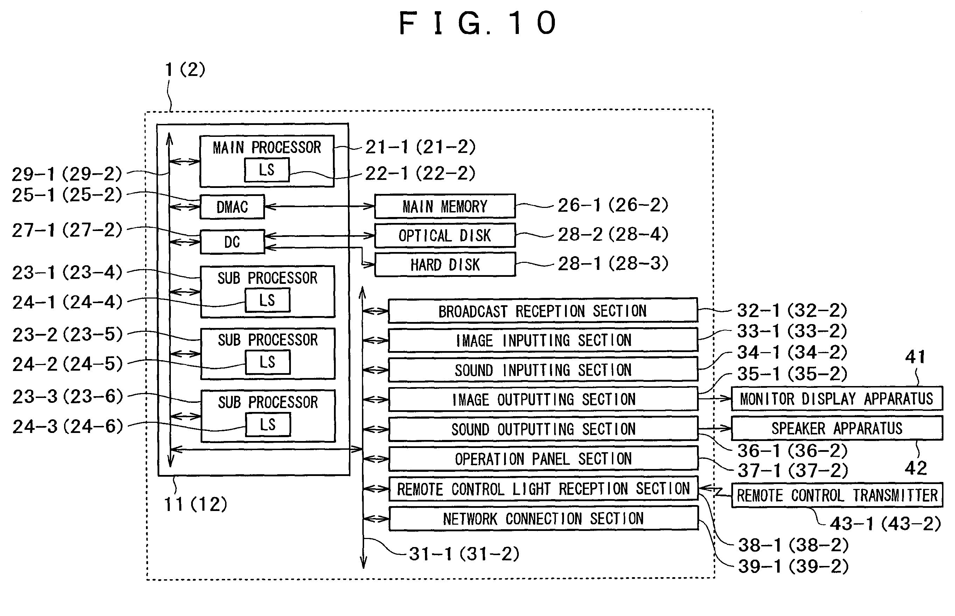

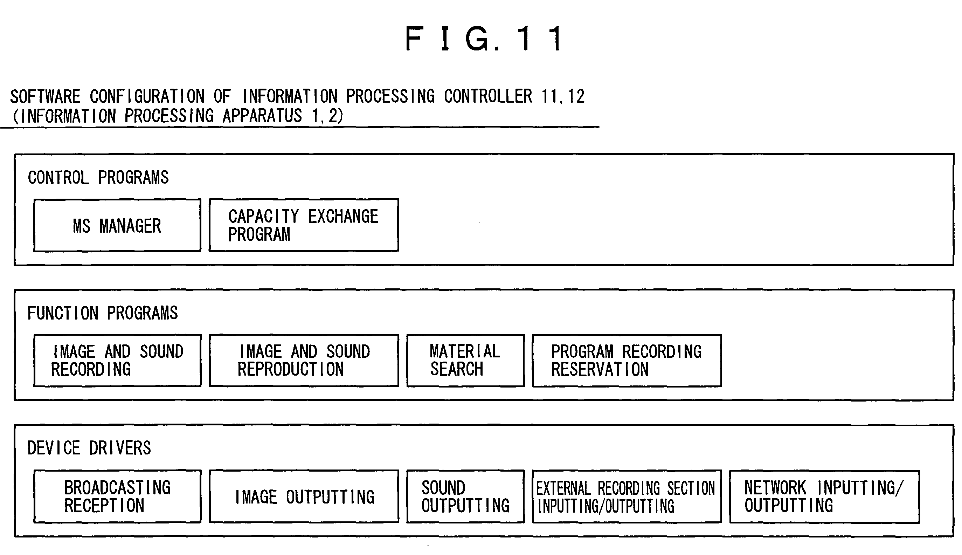

An example of the information processing apparatus 1 which includes the information processing controller 11 is a hard disk recorder. FIGS. 10 and 11 show a hardware configuration and a software configuration of the hard disk recorder shown in FIG. 9, respectively. Referring to FIG. 10, the information processing apparatus 1 shown includes, as the hardware configuration thereof, a built-in hard disk serving as the external recording section 28-1 shown in FIG. 1. The information processing apparatus 1 further includes the external recording section 28-2 shown in FIG. 1 into which an optical disk such as DVD±R/RW, CD±R/RW, a Bluray-Disc (registered trademark) and so forth can be loaded. The information processing apparatus 1 further includes a broadcast reception section 32-1, an image inputting section 33-1, a sound inputting section 34-1, an image outputting section 35-1, a sound outputting section 36-1, an operation panel section 37-1, a remote control light reception section 38-1 and a network connection section 39-1 connected to a bus 31-1 which is in turn connected to the bus 29-1 of the information processing controller 11.

The broadcast reception section 32-1, image inputting section 33-1 and sound inputting section 34-1 receive a broadcasting signal or an image signal and a sound signal from the outside of the information processing apparatus 1, convert the received signal or signals into digital data of a predetermined format, and signals the digital data to the bus 31-1 so as to be processed by the information processing controller 11. The image outputting section 35-1 and the sound outputting section 36-1 process image data and sound data signaled from the information processing controller 11 to the bus 31-1 and signal the image data and the sound data as they are or after converted into analog signals to the outside of the information processing apparatus 1. The remote control light reception section 38-1 receives a remote control infrared signal from a remote control transmitter 43-1.

As seen in FIGS. 9 and 10, a monitor display apparatus 41 and a speaker apparatus 42 are connected to the image outputting section 35-1 and the sound outputting section 36-1 of the information processing apparatus (hard disk recorder) 1, respectively.

Also the information processing apparatus 2 which includes the information processing controller 12 shown in FIG. 9 is a hard disk recorder and is configured similarly to the information processing apparatus 1 as seen in FIG. 10 in which reference numerals are applied in parentheses. However, a monitor display apparatus and a speaker apparatus are not connected to the information processing apparatus (hard disk recorder) 2 as seen in FIG. 9.

The information processing apparatus (hard disk recorders) 1 and 2, that is, the information processing controllers 11 and 12, include, as the software configuration shown in FIG. 11, the MS manager and the capacity exchange program as the control programs. Further, the information processing controllers 11 and 12 include programs for image signal and sound recording, image and sound reproduction, material search and program recording reservation as the function programs. Furthermore, the information processing controllers 11 and 12 include programs for broadcast reception, image outputting, sound outputting, external recording section inputting/outputting and network inputting/outputting as the device drivers.

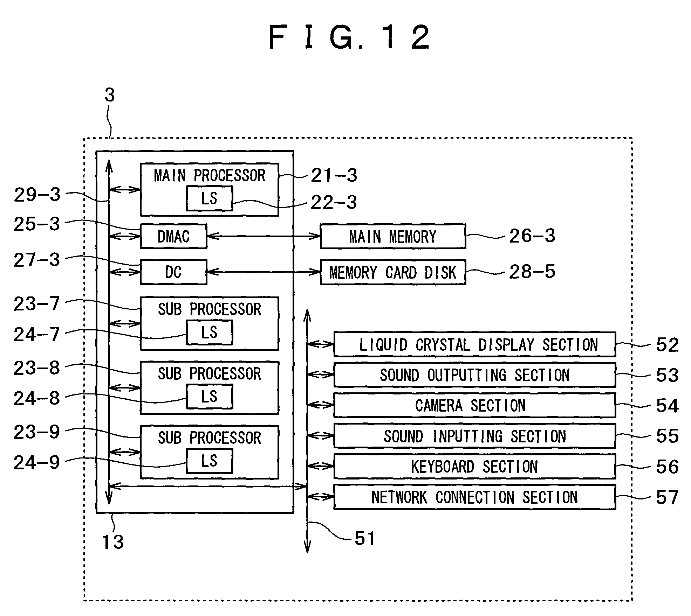

An example of the information processing apparatus 3 which includes the information processing controller 13 is a PDA (Personal Digital Assistant). FIG. 12 shows a hardware configuration of the information processing apparatus 3 formed as a PDA. Referring to FIG. 12, in the example shown, the information processing apparatus 3 includes the external recording section 28-5 shown in FIG. 1 into which a memory card disk can be loaded. The information processing apparatus 3 further includes a liquid crystal display section 52, a sound outputting section 53, a camera section 54, a sound inputting section 55, a keyboard section 56 and a network connection section 57 connected to a bus 51 which is in turn connected to the bus 29-3 of the information processing controller 13.

It is to be noted that the information processing controller 13 whose internal configuration is not shown in FIG. 1 includes a main processor 21-3, sub processors 23-7, 23-8 and 23-9, a direct memory access controller (DMAC) 25-3, a disk controller (DC) 27-3, and a bus 29-3. The main processor 21-3 includes a local storage (LS) 22-3, and the sub processors 23-7, 23-8 and 23-9 include local storages (LS) 27-7, 24-8 and 24-9, respectively.

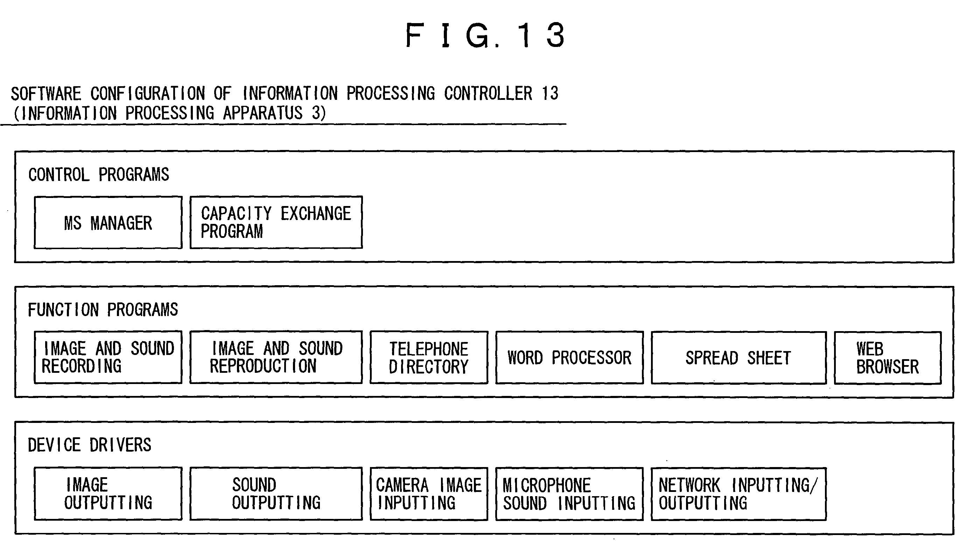

FIG. 13 shows a software configuration of the information processing apparatus (PDA) 3, that is, the information processing controller 13. Referring to FIG. 13, the information processing controller 13 includes the MS manager and the capacity exchange program as the control programs. Further, the information processing controller 13 includes programs for image and sound recording, image and sound reproduction, telephone directory, word processor and spreadsheet as the function programs, and includes a Web browser. Furthermore, the information processing controller 13 includes programs for image outputting, sound outputting, camera image inputting, microphone sound inputting and network inputting/outputting as the device drivers.

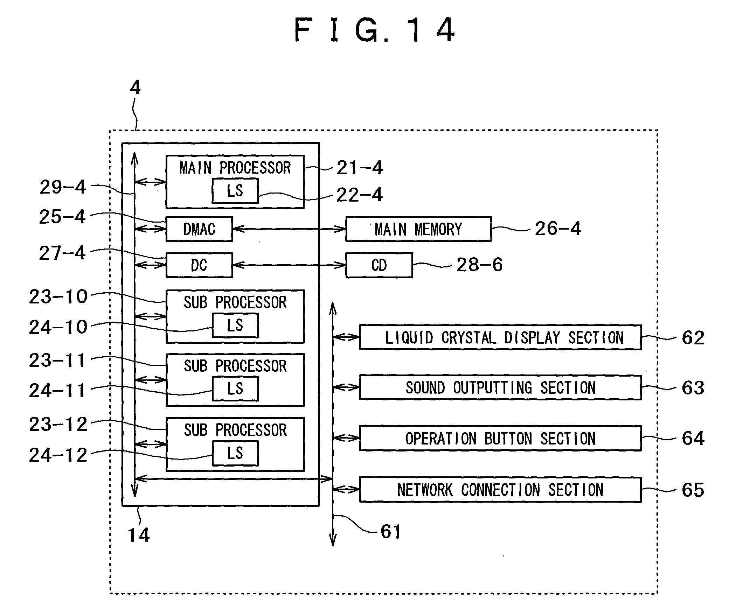

The information processing apparatus 4 which includes the information processing controller 14 is a portable CD player. FIG. 14 shows a hardware configuration of a portable CD player. Referring to FIG. 14, the portable CD player includes the external recording section 28-6 shown in FIG. 1 into which a CD (Compact Disc) can be loaded. The portable CD player further includes a liquid crystal display section 62, a sound outputting section 63, an operation button section 64 and a network connection section 65 connected to a bus 61 which is in turn connected to the bus 29-4 of the information processing controller 14.

It is to be noted that, the information processing controller 14 whose internal configuration is not shown in FIG. 1 includes a main processor 21-4, sub processors 23-10, 23-11 and 23-12, a direct memory access controller (DMAC) 25-4, a disk controller (DC) 27-4 and a bus 29-4. The main processor 21-4 includes a local storage 22-4, and the sub processors 23-10, 23-11 and 23-12 include local storages 24-10, 24-11 and 24-12, respectively.

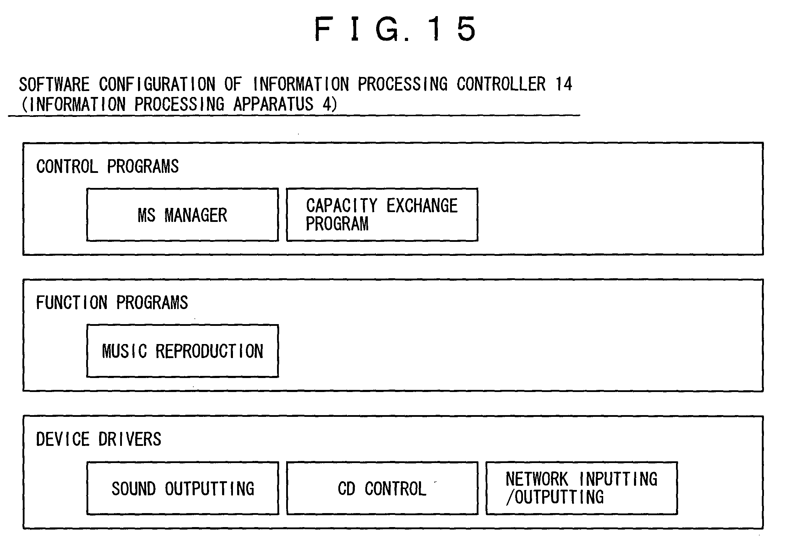

FIG. 15 shows a software configuration of the information processing apparatus (portable CD player) 4, that is, the information processing controller 14. Referring to FIG. 15, the information processing controller 14 includes the MS manager and the capacity exchange program as the control programs. Further, the information processing controller 14 includes a program for music reproduction as the function program and includes programs for sound outputting, CD control and network inputting/outputting as the device drivers.

In the network system shown in FIG. 9, the information processing apparatus 1, 3 and 4 are connected to the network 9, and the information processing apparatus 1 is set as the master apparatus (MS status = 0) and the information processing apparatus 3 and 4 are set as slave apparatus (MS status = 1).

If, in this state, the information processing apparatus 2 is newly connected to the network 9, then the MS manager which is executed in the main processor 21-2 included in the information processing controller 12 in the information processing apparatus 2 inquires the other information processing apparatus 1, 3 and 4 about the MS status and recognizes that the information processing apparatus 1 always exists as the master apparatus. Thus, the MS manager sets the self apparatus (information processing apparatus 2) as a slave apparatus (MS status = 1). Meanwhile, the information processing apparatus 1 set as the master apparatus collects the apparatus information of the apparatus including the newly added information processing apparatus 2 and updates the apparatus information tables in the main memory 26-1 based on the collected apparatus information.

Operation of the network system of FIG. 9 when, in this state, the user operates the information processing apparatus 3, which is a slave apparatus, for recording reservation of a broadcasting program for two hours is described below.

In this instance, the information processing apparatus 3 which is a slave apparatus accepts inputting of recording reservation information including information of recording start time, recording end time, a recording object broadcast channel and a recording picture quality, and produces a software cell including the recording reservation information and the recording reservation command as the DMA command. Then, the information processing apparatus 3 transmits the produced software cell to the information processing apparatus 1 which is the master apparatus.

The main processor 21-1 included in the information processing controller 11 in the information processing apparatus 1 which receives the software cell whose DMA command is the recording reservation command reads out the recording reservation command and refers to the apparatus information tables in the main memory 26-1 to specify an information processing apparatus which can execute the recording reservation command.

First, the main processor 21-1 reads out the information processing apparatus type IDs of the information processing apparatus 1, 2, 3 and 4 included in the apparatus information tables to extract those information processing apparatus which can execute a function program corresponding to the recording reservation command. Here, the information processing apparatus 1 and 2 having the information processing apparatus type ID indicative of the recording function are specified as candidate apparatus while the information processing apparatus 3 and 4 are excepted from candidate apparatus.

The main processor 21-1 included in the information processing controller 11 in the information processing apparatus 1 as master apparatus refers to the apparatus information tables to read out information regarding the apparatus such as the processing capacities of the main processors and sub processors and information regarding the main memories of the information processing apparatus 1 and 2 and discriminates whether or not the information processing apparatus 1 and 2 satisfy the required specifications necessary for execution of the function program corresponding to the recording reservation command. It is assumed here that both of the information processing apparatus 1 and 2 satisfy the required specifications necessary for execution of the function program corresponding to the recording reservation command.

Further, the main processor 21-1 refers to the apparatus information tables to read out the information regarding external recording sections of the information processing apparatus 1 and 2, and discriminates whether or not the free capacities of the external recording sections satisfy the capacity necessary for execution of the recording reservation command. Since the information processing apparatus 1 and 2 are hard disk recorders, the differences between the total capacities and the used capacities of the external recording sections 28-1 and 28-3 individually correspond to the free capacities.

In this instance, it is assumed that the free capacity of the external recording section 28-1 of the information processing apparatus 1 is 10 minutes when it is converted into a recording period of time and the free capacity of the hard disk 28-3 of the information processing apparatus 2 is 20 hours when it is converted into a recording period of time.

In this instance, the main processor 21-1 included in the information processing controller 11 in the information processing apparatus 1 which is the master apparatus specifies the information processing apparatus which can secure the free capacity for two hours necessary for execution of the recording reservation command as a slave apparatus of a destination of an execution request.

As a result, only the information processing apparatus 2 is selected as the execution request destination slave apparatus, and the main processor 21-1 included in the information processing controller 11 in the information processing apparatus 1 which is the master apparatus transmits the recording reservation command including the recording reservation information transmitted from the information processing apparatus 3 operated by the user to the information processing apparatus 2 to request the information processing apparatus 2 for recording reservation of the broadcast program for two hours described hereinabove.

Then, the main processor 21-2 included in the information processing controller 12 in the information processing apparatus 2 analyzes the recording reservation command and loads a function program necessary for recording from the hard disk 28-3, which is an external recording section, into the line memory 26-2. Then, the main processor 21-2 executes recording in accordance with the recording reservation information. As a result, image and sound data of the broadcast program for two hours reserved for recording are recorded on the hard disk 28-3 of the information processing apparatus 2.

In this manner, also in the network system shown in FIG. 9, the user can cause the plural information processing apparatus 1, 2, 3 and 4 to operate as a virtual single information processing apparatus 7 only by operating only one of the information processing apparatus without operating any other one of the information processing apparatus.

### B. Contents Processing Reproduction System

As another embodiment of the present invention, an AV recording and reproduction system can be constructed wherein operations of two or more CE apparatus each having a recording reservation function cooperate with each other through a network. Further, according to the present invention, a virtual AV recording and reproduction system can be constructed which solves the problem of private duplication relating to the copyright law where operations of two or more information processing apparatus each having a recording reservation function cooperate with each other through a network.

### B-1. System Configuration

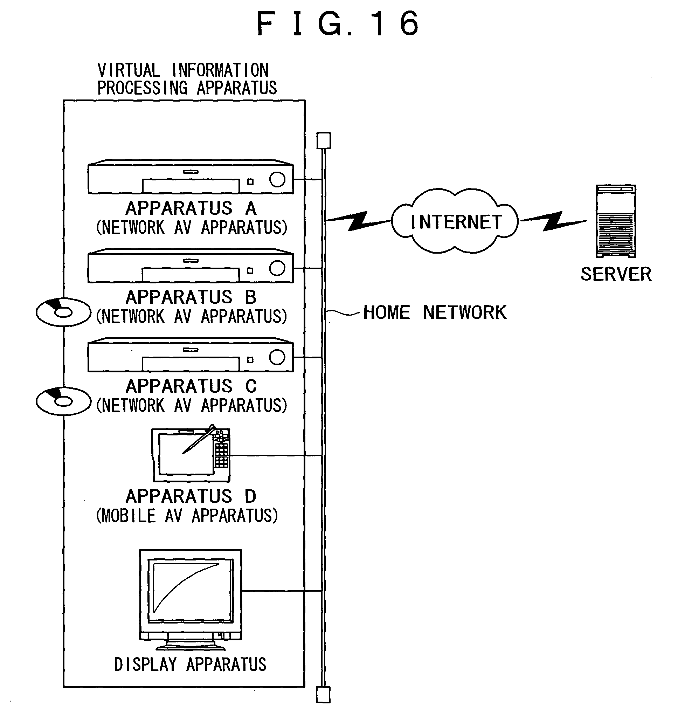

FIG. 16 schematically shows a configuration of another network system to which the present invention is applied.

A communication medium which interconnects different apparatus is formed from a combination of a wide area broadband network such as, for example, the Internet and a home network or some other LAN (Local Area Network).

As a mechanism for discovering another apparatus on a network, the Upnp (Universal Plug and Play) can be utilized. According to the Upnp, definition files described in the XML (extended Markup Language) form are exchanged between apparatus connected to each other by a network, and mutual authentication is performed through an addressing process, a discovery process and a service request process. Or, the mechanism can be implemented also by broadcasting a packet which describes prescribed apparatus information in the same segment.

The grid computing technique described hereinabove is applied to the network, and between the information processing apparatus, transfer of commands and data is performed in the form of a software cell. When a user performs operation on a certain one of the information processing apparatus, a software cell can be transmitted to another one of the processing apparatus to perform loading and execution of a desired program on the information processing apparatus of the transmission destination, but need not directly operate the apparatus of the transmission destination. In other words, cooperative operation of different apparatus is implemented by transfer of a software cell, and a plurality of information processing apparatus operate virtually as a single apparatus.

The Internet includes a large number of host apparatus such as WWW (World Wide Web) servers, information providing servers, database servers and application servers disposed thereon.

Meanwhile, a home network is installed in each home and is connected to an external network such as the Internet, for example, through a gateway. As seen in FIG. 16, apparatus A to C which can record AV contents such as a HD recorder, another apparatus D which may be a PDA (Personal Digital Assistance) or a mobile AV apparatus, a display apparatus and other various CE apparatus are connected on the home network. The home network can be constructed physically from a standard network interface such as the 10BaseT, 100BaseTX or Giga ether.

The apparatus A is a hard disk recorder and is a network AV apparatus which has a function of receiving BS/CS/ground wave digital broadcasts and another function of storing contents on a hard disk and normally remains connected to the network.

The apparatus B and the apparatus C are hard disk recorders and are network AV apparatus which have a function of receiving BS/CS/ground wave digital broadcasts and another function of storing contents on a hard disk as well as a further function of dubbing contents in the hard disk to various media such as a DVD (Digital Versatile Disc) and normally remain connected to the network.

The apparatus A to C have such a software configuration as described hereinabove with reference to FIG. 11. In particular, the apparatus A to C include the MS manager and the capacity exchange program as control programs and includes, as function programs, a video and audio recording program, a video and audio reproduction program, a material search program and a program recording reservation program. The apparatus A to C further include, as device drives, a broadcast reception program, a video outputting program, an audio outputting program, an external recording section inputting and outputting program and a network inputting and outputting program.

The apparatus D is a mobile AV apparatus such as a PDA which has a function of moving contents from a hard disk and reproducing the contents and can be connected to the network. The apparatus D has such a software configuration as described hereinabove with reference to FIG. 13. In particular, the apparatus D includes, as control programs, the MS manager and the capacity exchange program, and as function programs, a video and audio recording program, a video and audio reproduction program, a telephone directory program, a word processor program and a spreadsheet program as well as a Web browser. The apparatus D further includes, as device drivers, a video outputting program, an audio outputting program, a camera image inputting program, a microphone sound inputting program and a network inputting and outputting program.

The display apparatus is a display unit for displaying thereon information acquired from the various apparatus through the network.

### B-2. Recording Reservation of Contents

Where a plurality of information processing apparatus cooperate in recording reservation operation through a home network as seen in FIG. 16, the information processing apparatus operate virtually as a single apparatus on the home network. Thus, a user can use any one of the apparatus to perform recording reservation setting on any apparatus connected to the home network.

Where the user wants to perform recording reservation setting of a television program, the user can confirm, on a GUI of a particular information processing apparatus, a recording reservation situation or a free situation of a disk of a different information processing apparatus connected thereto through the network and perform recording reservation setting for a further information processing apparatus.

In this instance, a GUI on each information processing apparatus which has a recording reservation function has the following functions:
(1) Function of displaying a cooperation state with a different apparatus present on the same network;
(2) Function of transmitting information of a program reserved for recording on the self apparatus or function of merging and displaying recording reservation program information received from a different apparatus into and together with recording reservation program information of the self apparatus. Upon such merging and displaying, information of both of a plurality of recording reservation programs within the same time zone can be displayed. Further, a function of setting a recording reservation of the self apparatus or the different apparatus based on the displayed recording reservation program information; and
(3) Function of displaying presence or the number of different apparatus which exist on the same network and can cooperate with the self apparatus when setting of a recording reservation is performed.

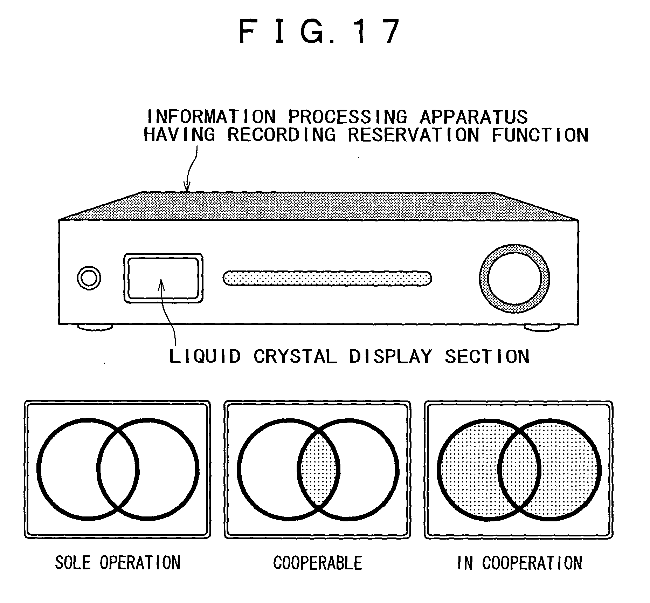

As the measures for displaying information in (1) above, such a liquid crystal display section or an LED indicator as shown in FIG. 17 may be provided on the front face of the information processing apparatus.

FIG. 16 shows an example of an indicator for indicating a system cooperation state. If an information processing apparatus which can cooperate with the information processing apparatus is connected to or disconnected from the network, then the display contents are changed. In FIG. 16, examples of display when the information processing apparatus operates in a stand alone state (sole operation), when the information processing apparatus can cooperate and when the information processing apparatus is in an in-cooperation state are shown.

The sole operation state here signifies a state wherein the self apparatus is not connected physically or electrically to any other apparatus. Meanwhile, the cooperable state signifies a state wherein the self apparatus is physically and electrically connected to at least one of different apparatus through a network and exchange of apparatus information has been performed already as a result of execution of the MS manager or the capacity exchange program on both of the information processing apparatus. Further, the in-cooperation state signifies a state wherein the self apparatus is in the cooperable state and besides distributed processing is performed between the plural information processing apparatus through transmission from one to the other of the information processing apparatus of a command for requesting for a process such as the kick command or a function program execution command.

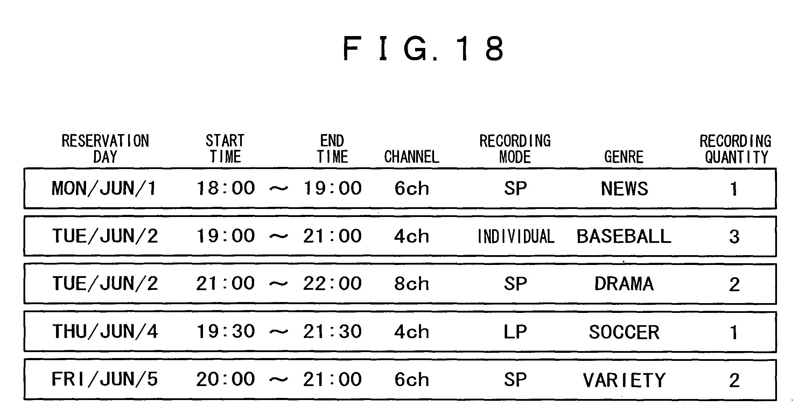

As measures for displaying information in (2) above, it is a possible idea to similarly use and cause such a liquid crystal display section as shown in FIG. 17 to display recording reservation program information of the self apparatus or a different apparatus as such a GUI recording reservation setting screen as shown in FIG. 18. In the example shown in FIG. 18, on a GUI recording reservation setting screen of a certain information processing apparatus, recording reservation information in all of the information processing apparatus on the network is displayed in lines in accordance with a time series on the same table.

In the example shown in FIG. 17, one entry is provided for each one reservation setting, and each entry includes fields for describing the reservation day, start time and end time, channel, recording mode, genre, apparatus name and so forth. While, in the example shown in FIG. 17, the entries are sorted in the reservation date and hour, they may otherwise be sorted in any other form.

If a recording quantity is designated in a record for each recording reservation, then a recording reservation regarding a designated broadcasting program, that is, the same contents, is set by a number of network AV apparatus equal to the designated recording quantity. When recording reservation of copy-once contents copyright protected is to be performed, the required quantity (number) of a piece of contents is designated on the recording reservation GUI shown in FIG. 18 so that the same piece of contents is recorded by the plural number of apparatus and the same contents can be owned by the plural number of apparatus.

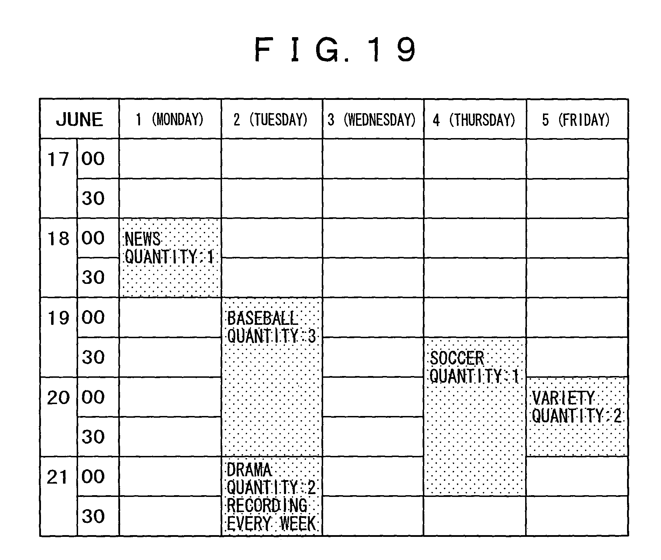

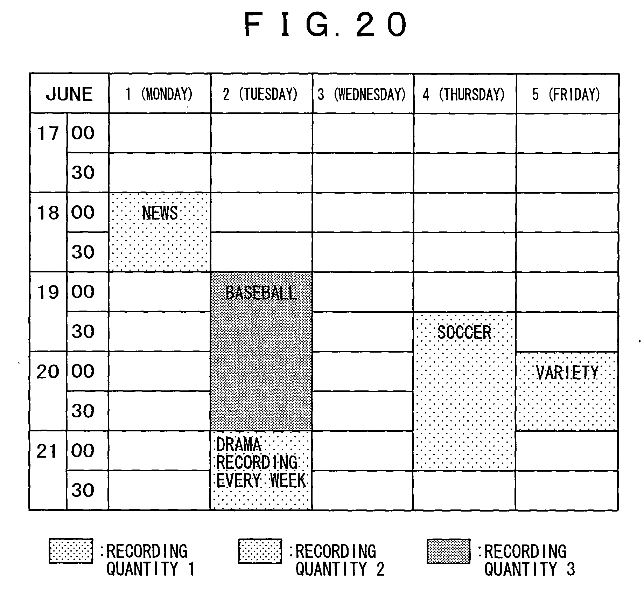

FIG. 19 shows another example of a configuration of the GUI recording reservation setting screen. The GUI recording reservation setting screen is formed not in such a line display form as shown in FIG. 18 but in a calendar form in a unit of a week. In this instance, as seen in FIG. 19, recording reservation information on each information processing apparatus is disposed on the pertaining reservation day and reservation time zone on the calendar. In other words, a reservation day, a reservation time zone and reservation items (channel, recording mode and contents information) can be displayed in the form of a table. If a recording quantity is designated in the record of each recording reservation, then a recording reservation regarding the designated broadcasting program, that is, the same contents, is set to a number of network AV apparatus equal to the designated recording quantity. In the example shown in FIG. 19, a recording quantity is indicated in a program column in which a recording reservation is set. Further, as another form for indicating a recording quantity, program columns of recording reservations may be indicated in different colors depending upon the recording quantity as seen in FIG. 20.

Now, an operation procedure when a plurality of information processing apparatus cooperate on a network to perform recording reservation is described in detail.

Recording reservation can be performed from any information processing apparatus only if it is normally connected to a home network such as the apparatus A to C shown in FIG. 16. If operation to set a plurality of recording reservations of the same contents is performed from a certain one of the information processing apparatus which are normally connected to the home network, then those information processing apparatus which are to make destinations of a recording request are automatically determined from among the information processing apparatus normally connected to the home network based on the remaining capacity of the hard disk, the free resource amount of the main processor and so forth, and a request for recording reservation of the same contents is issued to the plural number of selected information processing apparatus. Then, when the recording time comes, each of the information processing apparatus requested for recording uses a tuner therein to record the same contents on the individual hard disk.

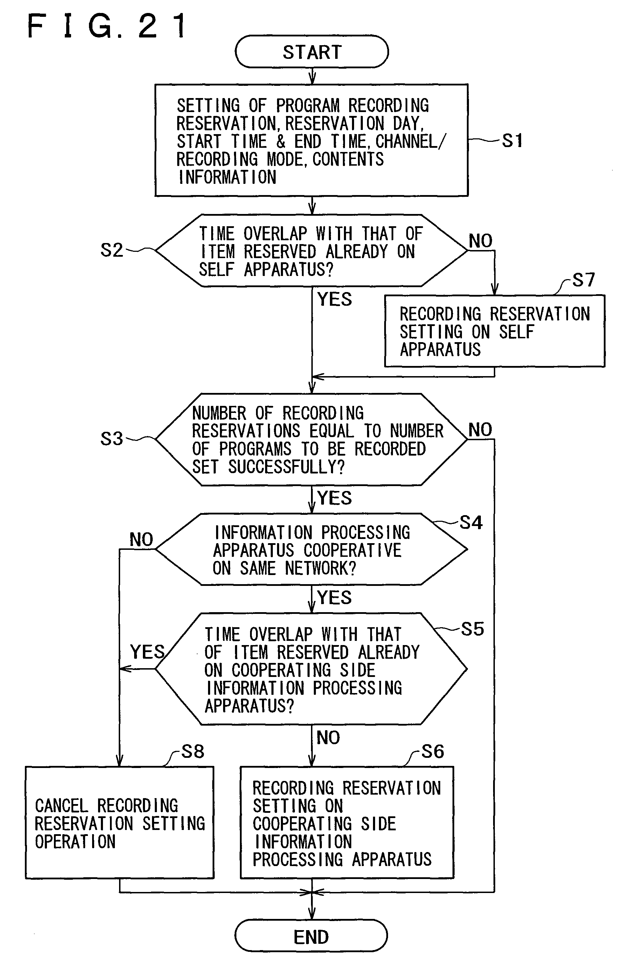

FIG. 21 shows a flow chart of a processing procedure wherein, in a home network environment wherein a plurality of information processing apparatus having a recording reservation function are connected to each other, a user sets a recording reservation of a broadcasting program on a particular one of the information processing apparatus.

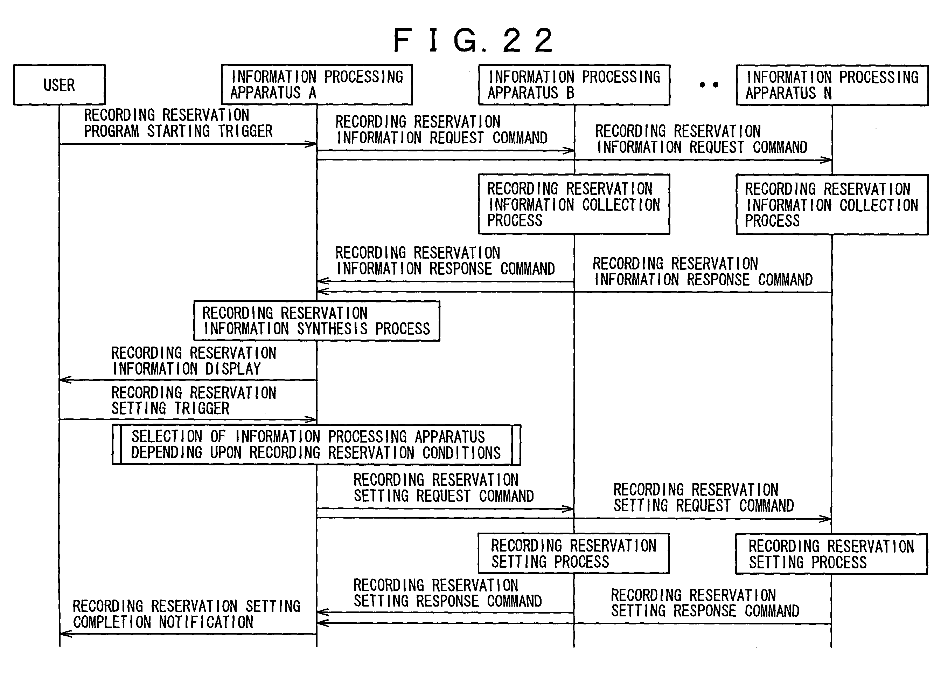

Referring to FIG. 22, the user would use an information processing apparatus to input program recording reservation setting information regarding the reservation data, start time and end time of recording, channel, recording mode, contents information and so forth (step S1) .

The information processing apparatus first checks, in response to the program recording reservation setting input, whether or not the input exhibits an overlap in time with items reserved already on the information processing apparatus of the user (step S2).

If the newly inputted program recording reservation setting does not overlap with any of the items set for recording reservation, then the information processing apparatus sets a recording reservation on itself (step S7).

Then, it is checked whether or not a number of recording reservations equal to the recording quantity have been set (step S3). Further, in a case wherein the program recording reservation setting inputted newly overlaps with an item set already for recording reservation on the self apparatus or in another case wherein, although a recording reservation is set successfully on the self apparatus, a number of recording reservations equal to the recording quantity are not set, it is further checked whether or not a different information processing apparatus which can cooperate in recording reservation function exists on the same network (step S4).

A procedure for discovering an information processing apparatus which is connected to the network and has a cooperable recording reservation function is implemented by starting of the master/slave manager and the capacity exchange program described hereinabove.

If it is discriminated that an information processing apparatus with which the information processing apparatus can cooperate in recording reservation function does not exist on the same network, then the recording reservation setting operation is canceled and the processing routine is ended.

On the other hand, if it is discriminated that an information processing apparatus with which the information processing apparatus can cooperate in recording reservation function exists on the same network, then it is further checked whether or not an item and time reserved already overlap on the different information processing apparatus with which the information processing apparatus cooperates in recording reservation function on the network (step S5).

If an item and time reserved already overlap on the different information processing apparatus with which the information processing apparatus cooperates in recording reservation function on the network, that is, if the recording reservation cannot be set also on the cooperating information processing apparatus side, the recording reservation setting operation is canceled (step S8), and this is presented to the user through a GUI screen or the like. Thereafter, the processing routine is ended.

On the other hand, if an item and time reserved already do not overlap on the different information processing apparatus with which the information processing apparatus cooperates in recording reservation function on the network, that is, if the recording reservation can be set on the cooperating information processing apparatus side, then the recording reservation is set on a number of cooperating information processing apparatus equal to the remaining recording quantity (step S6). Thereafter, the processing routine is ended.

When a recording reservation is set on the cooperating information processing apparatus, the recording reservation program information over the overall network system is displayed in a merged form as described hereinabove with reference to FIGS. 18 to 20. Therefore, the user can perform the recording reservation setting operation considering the plural information processing apparatus on the network virtually as a single information processing apparatus.

It is to be noted that recording operation itself of a program set for a recording reservation does not have a direct relationship with the subject matter of the present invention, and therefore, description of the recording operation is omitted herein.

As such a processing procedure as described above is executed, the plural information processing apparatus on the network cooperate with each other and behavior as a virtual single information processing apparatus. Accordingly, the user need not be conscious of an information processing apparatus placed at a different place but can operate an information processing apparatus located in front of the user as a virtually single information processing apparatus which includes the plural information processing apparatus on the network.

Now, the operation executed at step S6 of FIG. 21 for setting a recording reservation on the cooperating information processing apparatus on the network is described in more detail. FIG. 22 illustrates an operation procedure where a plurality of information processing apparatus A to N having a recording reservation function are connected to a network and a user performs recording reservation setting operation on the information processing apparatus A whereas a recording reservation is set finally on the information processing apparatus B. It is to be noted, however, that a recording reservation program for performing recording reservation is one of function programs loaded into the main memory of and executed by each information processing apparatus. Further, between the information processing apparatus, transfer of a command is performed in the form of a software cell.

The user would give a trigger to start the recording reservation program on the information processing apparatus A which is operated directly by the user.

In response to the trigger, the information processing apparatus A starts the recording reservation program on the information processing apparatus A itself and issues a request command for recording reservation information to the other information processing apparatus B to N.

Each of the information processing apparatus B to N receiving the request command for recording reservation information executes a process for collection of recording reservation information including all of recording reservation program information and returns the collected recording reservation information as a response command to the information processing apparatus A.

The information processing apparatus A receives the response commands of recording reservation information from the information processing apparatus B to N with which the information processing apparatus A cooperates on the network and synthesizes all of the recording reservation program information included in the received recording reservation information. Then, the information processing apparatus A displays the synthesized recording reservation program information in a merged form on a GUI screen as described with reference to FIGS. 18 to 20.

The user can perform recording reservation setting operation considering the plural information processing apparatus A to N on the network as a virtual single information processing apparatus. Then, when the user wants to set a plurality of recording reservations of different programs within the same time zone, the user can confirm a recording reservation situation or a free situation of an external recording section of another information processing apparatus on a GUI on a certain information processing apparatus and perform recording reservation setting for a further information processing apparatus.

When a trigger for recording reservation setting is received from the user through a GUI screen, the information processing apparatus A executes an information processing apparatus selection process for selecting a cooperating information processing apparatus for which a recording reservation should be set in accordance with recording reservation setting conditions given thereto. A detailed procedure of the information processing apparatus selection process is hereinafter described.

In the example illustrated in FIG. 22, it is decided by the information processing apparatus selection process that recording reservation setting should be performed on the information processing apparatus B and the information processing apparatus N. Accordingly, the information processing apparatus A issues a recording reservation setting request command to the information processing apparatus B and the information processing apparatus N.

Each of the information processing apparatus B and the information processing apparatus N performs a recording reservation setting process in response to the recording reservation setting request command. Then, each of the information processing apparatus B and the information processing apparatus N returns a recording reservation setting response command to the information processing apparatus A of the source of the request. In response to reception of the response commands, the information processing apparatus A notifies the user through a GUI screen that setting of the recording reservation is completed. Recording operation itself of a program set for a recording reservation does not have a direct relationship with the subject matter of the present invention, and therefore, description of the recording operation is omitted herein.

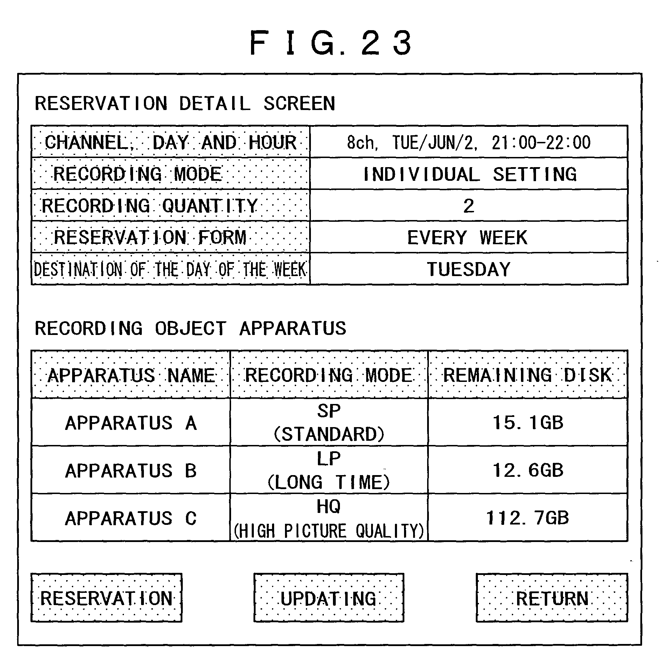

As described hereinabove, where the recording quantity in a recording reservation of a television program is set to 2 or more, it is possible to search free resources of information processing apparatus cooperating through a network and automatically set a number of recording object apparatus equal to the designated recording quantity. Or, where the user wants not to perform such automatic setting but to perform setting by the user itself, also it is possible for the user to perform manual setting of recording object apparatus or setting of recording modes for individual apparatus. FIG. 23 shows an example of a configuration of a setting screen in this instance.

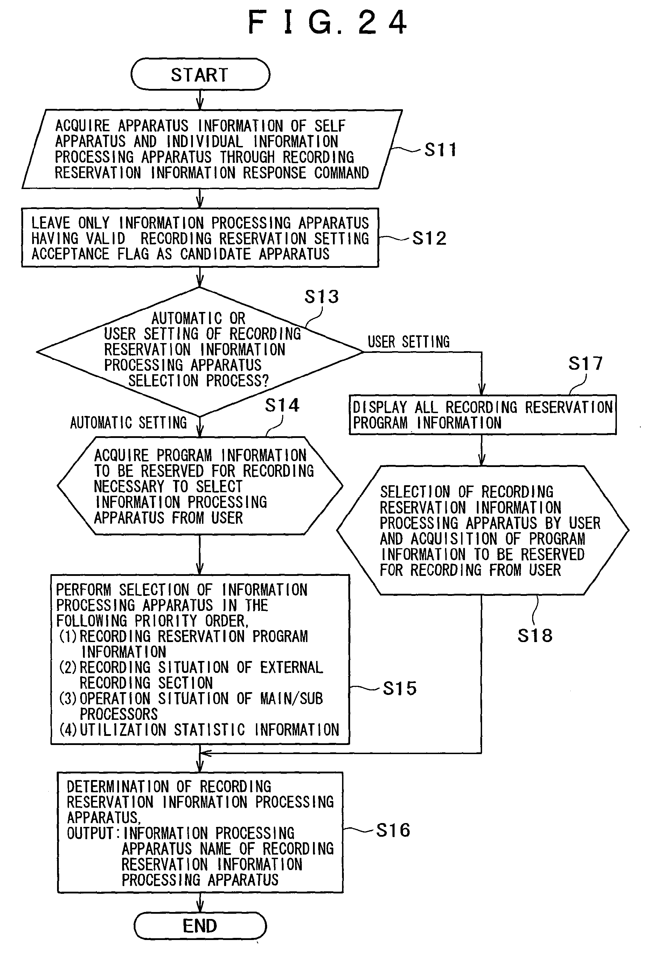

FIG. 24 shows a flow chart of a processing procedure for performing information processing apparatus selection depending upon recording reservation setting conditions.

An information processing apparatus on which a user performs recording reservation setting operation acquires recording reservation information including all recording reservation program information of the self apparatus and of the different information processing apparatus with which the self apparatus cooperates in recording reservation function through the network through the recording reservation information response commands from the different apparatus (step S11).

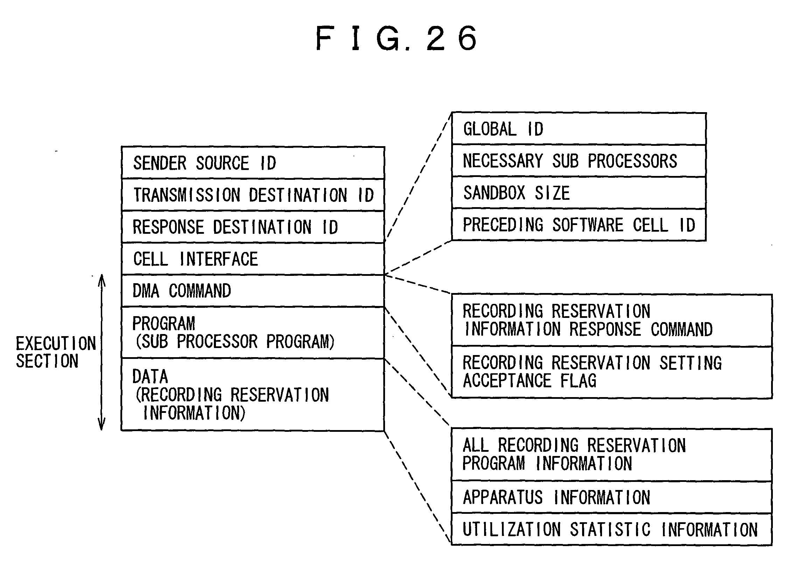

While the recording reservation information handled here is hereinafter described, it includes a recording reservation setting acceptance flag, all recording reservation program information, apparatus information, utilization statistic information and so forth as seen in FIG. 26.

Each of the information processing apparatus cooperating through the network indicates, with the recording reservation setting acceptance flag thereof, whether or not recording reservation setting from a different information processing apparatus is accepted. The information processing apparatus of the source of the request leaves only those information processing apparatus whose recording reservation setting acceptance flag is in a validated state as candidate apparatus (step S12).

Then, the information processing apparatus discriminates whether the setting process of a recording reservation information processing apparatus should be performed automatically or by manual operation of a user (step S13).

When the setting process of a recording reservation information processing apparatus should be performed automatically, the information processing apparatus acquires program information to be reserved for recording which is necessary for selection of an information processing apparatus from the user (step S14). Then, the information processing apparatus selects an information processing apparatus which can record an acquired program in accordance with a predetermined priority order (step S15). The predetermined priority order is, for example, such as given below:
(1) Recording reservation program information of each information processing apparatus;
(2) Recording situation of an external recording section of each information processing apparatus;
(3) Operation situation of the main processor and sub processors of each information processing apparatus; and
(4) Utilization statistic information of each information processing apparatus.

On the other hand, when the setting process of a recording reservation information processing apparatus should be performed manually by the user, all of the recording reservation program information is displayed in a merged form as described hereinabove with reference to FIGS. 18 to 20 on a GUI screen of the information processing apparatus operated by the user (step S17). In addition to all of the recording reservation program information, also apparatus information and utilization statistic information regarding the information processing apparatus on the network received as described above are displayed together. The user would select an information processing apparatus which the user regards most appropriate based on the displayed information and then input program information for recording reservation (step S18).

After a recording reservation information processing apparatus is decided by the automatic or manual procedure in this manner, a recording reservation setting request command is transmitted to the decided recording reservation information processing apparatus. Thereafter, the information processing apparatus name of the information processing apparatus determined after the recording reservation setting response commands are received is returned to the user (step S16), and then the processing routine is ended. Naturally, the self apparatus may possibly be decided as a recording reservation information processing apparatus.

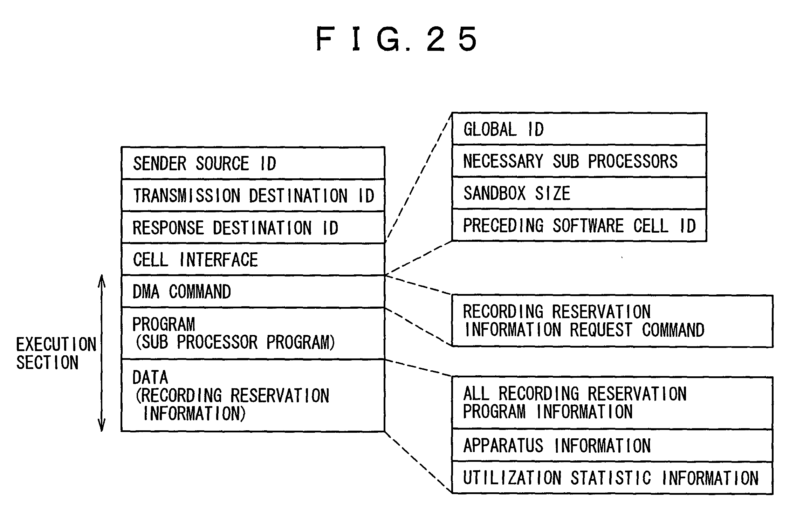

FIG. 25 shows a software cell configuration of the recording reservation information request command. The software cell shown in FIG. 25 basically has the structure described hereinabove with reference to FIG. 3. The DMA command includes the recording reservation information request command. The program includes a recording reservation program and relating sub processor programs. Further, the data includes recording reservation information of the information processing apparatus from which the recording reservation information request command has been transmitted. The recording reservation information includes all recording reservation program information, apparatus information and utilization statistic information. The all recording reservation program information, apparatus information and utilization statistic information are hereinafter described.

FIG. 26 illustrates a configuration of a software cell of the recording reservation information response command. Also the software cell illustrated in FIG. 26 basically has the structure described hereinabove with reference to FIG. 3. The DMA command includes a recording reservation information response command and a recording reservation setting acceptance flag. The program includes nothing. Further, the data includes recording reservation information of the information processing apparatus from which the recording reservation information response command has been transmitted. Also the recording reservation information in this instance includes all recording reservation program information, apparatus information and utilization statistic information.

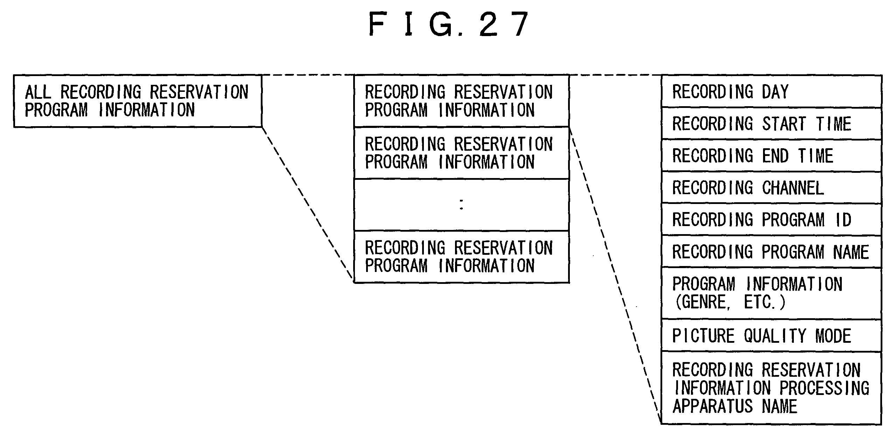

Referring to FIG. 27, the all recording reservation program information includes a number of pieces of recording reservation program information corresponding to the number of programs reserved for recording. Each piece of the recording reservation program information includes fields for describing the recording reservation day, recording start time, recording end time, recording channel, recording program ID, recording program name, program information (genre and so forth), picture quality mode and recording reservation information processing apparatus name of the pertaining recording reservation.

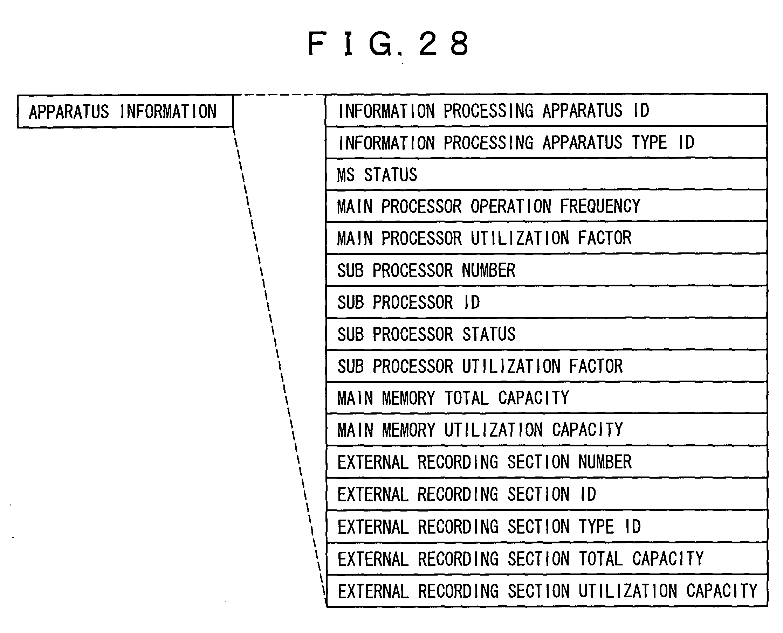

Further, FIG. 28 shows a configuration of the apparatus information included in the data as the recording reservation information. The apparatus information illustrated in FIG. 28 includes fields having a structure same as that described hereinabove with reference to FIG. 4.

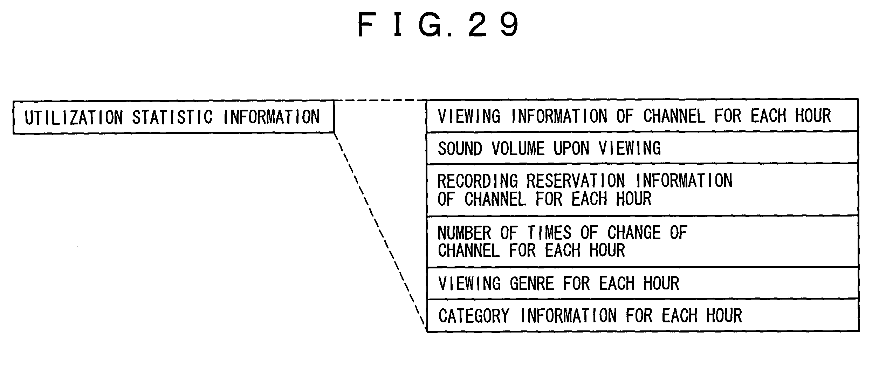

FIG. 29 shows a configuration of the utilization statistic information included in the data as the recording reservation information. As seen in FIG. 29, the utilization statistic information includes fields for describing viewing information of channels for each hour, sound volume upon viewing, recording reservation information of channels for each hour, changing numbers of times of channels for each hour, genres of viewing for each hour and category information for each hour.

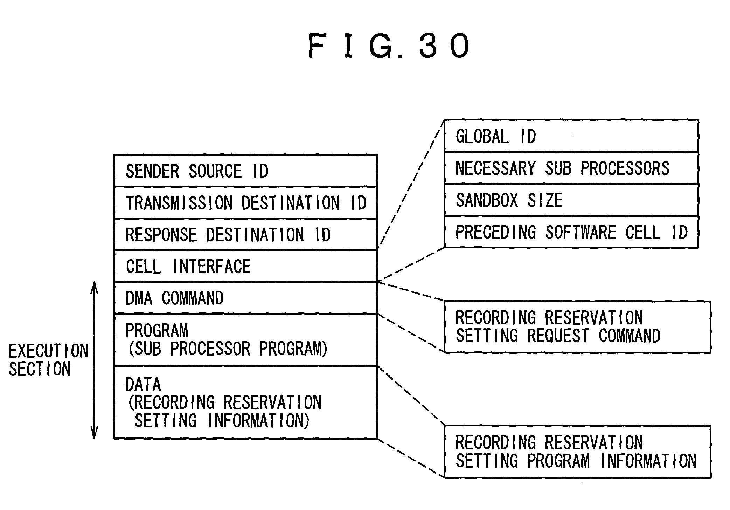

FIG. 30 shows a software cell configuration of the recording reservation information request command. The software cell shown in FIG. 30 basically has a structure described hereinabove with reference to FIG. 3. The DMA command includes the recording reservation setting request command. The program includes nothing. The data includes recording reservation setting program information and indicates recording reservation program information of a program to be set for recording reservation. Details of the recording reservation program information are such as described hereinabove with reference to FIG. 27.

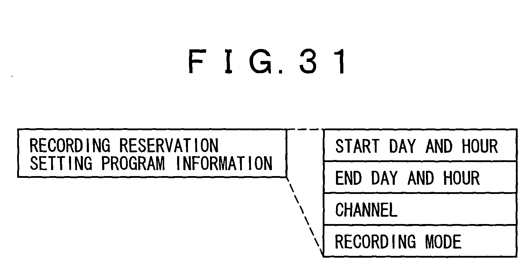

FIG. 31 illustrates a configuration of recording reservation setting program information included as data of the recording reservation setting request command. Referring to FIG. 31, the recording reservation setting program information includes fields for describing the start day and hour, end day and hour, channel and recording mode.

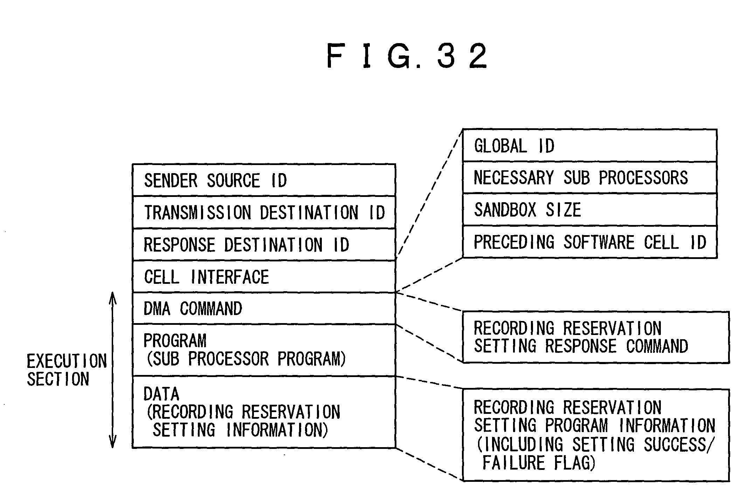

FIG. 32 shows a software cell configuration of the recording reservation setting response command. Also the software cell shown in FIG. 32 basically has a structure described hereinabove with reference to FIG. 3. The DMA command includes the recording reservation setting response command. The program includes nothing. The data includes recording reservation setting program information and indicates recording reservation program information of a program set for recording reservation. Details of the recording reservation program information are such as described hereinabove with reference to FIG. 27. Further, the recording reservation setting program information includes a flag representative of whether the setting results in success or failure.

### B-3. Reproduction of Recorded Contents

As described in the preceding item B-2, in the virtual information processing apparatus according to the present embodiment, a number of recording reservations of the same broadcasting program equal to a designated recording quantity, that is, a required number of contents, are set and a recording process is performed. As a result, the virtual information processing apparatus can own one, two or more contents with regard to each recorded program.

Further, in the virtual information processing apparatus, information processing apparatus cooperating with each other can share information relating to contents owned thereby. For example, a certain information processing apparatus can grasp contents owned by the virtual information processing apparatus and the number of the contents by issuing an owned contents inquiry request command formed as a software cell to the information processing apparatus on the network and receiving and tabulating owned contents inquiry response commands from the information processing apparatus. The data area of the owned contents inquiry response command is formed from fields for describing the recording start day and hour, end day and hour, channel and recording mode regarding each of the contents owned by the information processing apparatus (not shown).

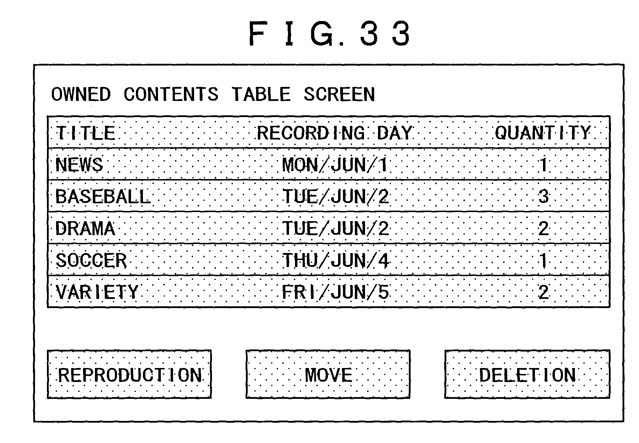

Information regarding owned contents tabulated on one information processing apparatus can be displayed in a table on the display apparatus on the network. FIG. 33 shows an example of a configuration of a screen for displaying a table of owned contents. Referring to FIG. 33, in the example shown, a record is provided for each program title. Each records indicates a program title name, a recording day and an owned quantity. The owned quantity represents the total number of object contents owned by the virtual information processing apparatus, that is, owned in the hard disks of all of the information processing apparatus (network AV apparatus) connected to the home network.

The table screen further includes buttons for indicating reproduction, move and deletion operations of contents. If the reproduction button is selected after contents are designated from within the table, then a process for reproducing the pertaining contents is started. If the move button is selected after contents are designated from within the table, then a process for moving the pertaining contents from one of the information processing apparatus by which the pertaining contents are owned to another one of the information processing apparatus is started. On the other hand, if the deletion button is selected after contents are designated from within the table, then a process for deleting the pertaining contents from the pertaining information processing apparatus is started.

If the user selects contents from within the owned contents table and then depresses the "reproduction" button, then a reproduction process of the contents is started. At this time, an information processing apparatus which makes a master apparatus automatically selects, from among the network AV apparatus (apparatus A to C) which are always connected to the home network, one apparatus which has the object contents and has the highest remaining capacity of the CPU resource, and issues a request for reproduction to the selected apparatus. Thus, the user can perform reproduction without being aware of in which apparatus the contents exist.

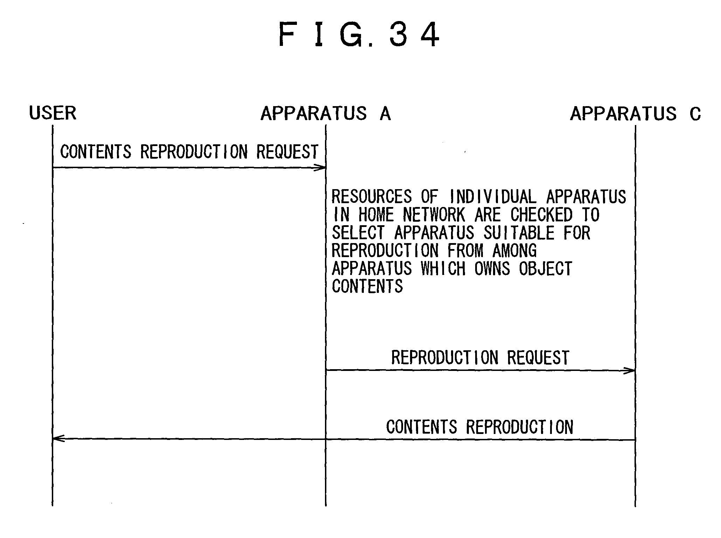

FIG. 34 illustrates an operation sequence for reproducing owned contents. The operation sequence illustrated is started when the reproduction button is selected after contents are designated from within the owned contents table screen.

Referring to FIG. 34, in the example illustrated, the user would issue a reproduction request of the contents through the apparatus A.

The apparatus A refers to the resources of the apparatus in the home network, selects an apparatus suitable for reproduction from among those apparatus which own the object contents and issues a reproduction command to the selected apparatus. For example, an apparatus having a high surplus processing capacity is selected as an apparatus for reproduction of the contents.

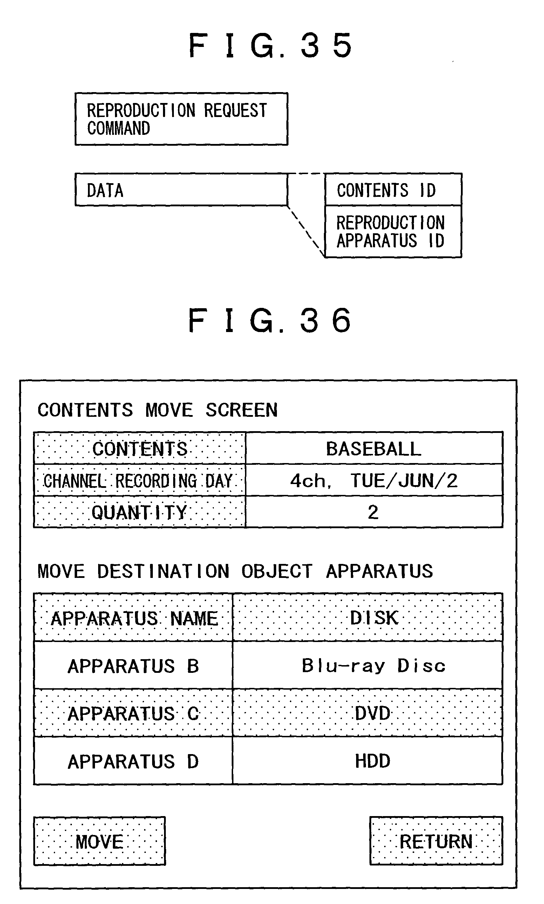

The reproduction command is formed as a software cell, and the data area of the software cell includes a contents ID for identification of the object contents and a reproduction apparatus ID for designating the apparatus of a destination of transmission of a reproduction signal of the contents (refer to FIG. 35). It is assumed that, in the example illustrated in FIG. 34, the reproduction apparatus ID designates the apparatus A.

In the example illustrated in FIG. 34, the apparatus C is selected as an apparatus suitable for reproduction of the contents. Thus, the apparatus C receives the contents reproduction request command, extracts the contents from the hard disk, performs demodulation and decoding processes for the contents, and transmits a contents reproduction signal to the apparatus A.

### B-4. Move of Recorded Contents

The user may sometimes want to copy and carry contents owned by the virtual information processing apparatus on the home network through a recording process on and together with various disks or a mobile apparatus.

If the move button is selected after contents are designated on the owned contents table screen shown in FIG. 33, then a moving process of the contents from an information processing apparatus by which the contents are currently owned to another information processing apparatus is started.

As a result of the starting of the contents move process, such a contents move screen as shown in FIG. 36 is displayed, and the user can select a destination of the move on the contents move screen. Referring to FIG. 36, the screen displays contents information including the title name, recording day and hour and owned quantity of the contents of an object of the move and further displays a table of move destination object apparatus to which contents can be moved on the home network. Further, a move button and a return button are prepared on the contents move screen. If the move button is selected after a move destination object apparatus is designated, then a process of moving the contents to the designated move destination is started. On the other hand, if the return button is selected, then the preceding screen (for example, the owned contents table screen) is restored.

Those information apparatus which can be selected as a move destination object apparatus on the contents move screen are a network AV apparatus which includes various disks (in the example shown in FIG. 16, the apparatus B and the apparatus C) and a mobile AV apparatus (the apparatus D). Where an apparatus includes a plurality of different disks, it is possible to select also the kind of a duplication object disk.

If a move destination is selected and the "move" button is depressed on the contents move screen, then the contents of an object of the move are moved to the designated disk or the designated mobile apparatus having a hard disk. In the example illustrated in FIG. 36, the DVD disk of the apparatus C is designated as the move destination and is displayed in a highlight display fashion.

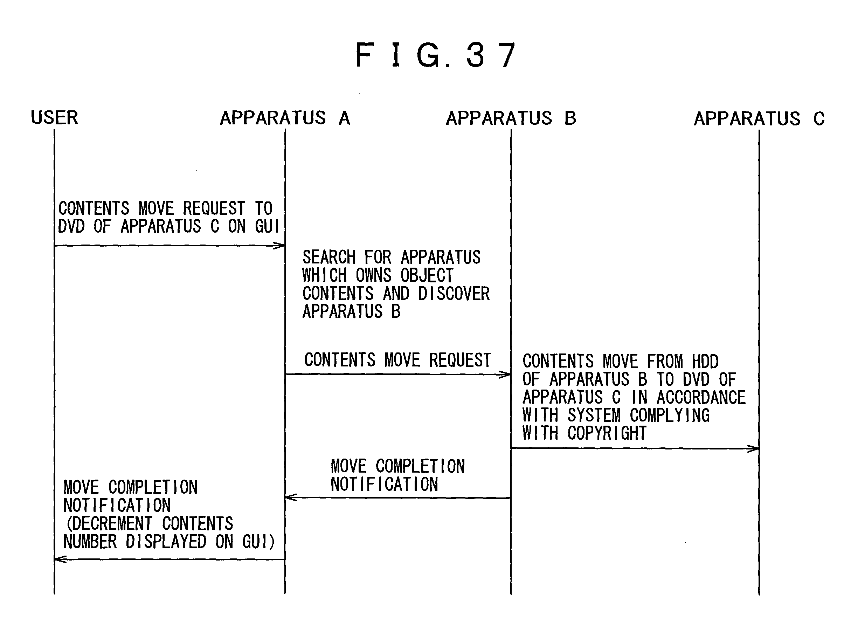

FIG. 37 illustrates an operation sequence upon move of contents. Referring to FIG. 37, in the example illustrated, an operation sequence when designation of contents and selection of a move destination object apparatus are performed on the apparatus A and contents owned by the apparatus B are moved to the apparatus C is illustrated.

The user would designate contents to be moved and a move destination of the contents on a GUI (refer to FIG. 36) displayed on the monitor screen of the apparatus A. Here, the apparatus C is designated as the move destination.

If two or more designated contents are owned on the home network, then from which one of those apparatus which own the same contents the contents should be moved, that is, an apparatus of a source of the move of the contents, is selected.

As an apparatus of the source of the move of the contents, an apparatus which has the highest surplus processing capacity of the CPU resource and so forth is automatically selected from among those network AV apparatus (apparatus A to C of FIG. 16) normally connected to the home network which own the contents of the object of the move.

It is to be noted that, upon recording reservation, recording modes different from each other are set to the different apparatus, for example, through the GUI screen shown in FIG. 23 to record the same television program. In such an instance, the apparatus of the source of movement of the contents may be selected not automatically but manually while the recording modes of the contents move sources are confirmed individually.

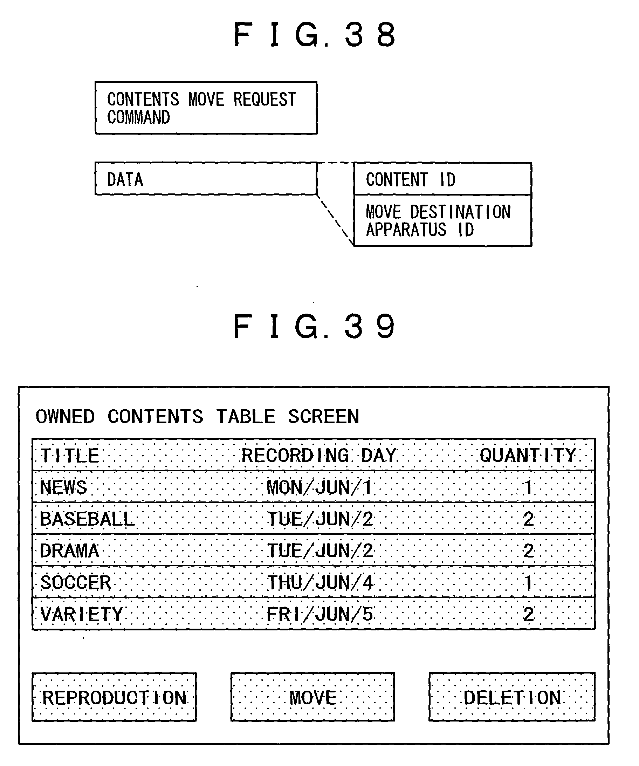

In the example illustrated in FIG. 37, it is assumed that the apparatus B is discovered through the selection operation of apparatus which own the contents of the move object. In this instance, the apparatus A issues a contents move request command formed from a software cell to the apparatus B. FIG. 38 illustrates an example of a configuration of the data area of the contents move request command. Referring to FIG. 38, the data area describes a contents ID for identification of contents of an object of move and a move destination apparatus ID for designating an apparatus of an object of a move destination.

Then, the contents are moved from the selected contents move source apparatus to various disks or hard disk designated as the move destination object apparatus in accordance with a system conforming to the copyright.

The system conforming to the copyright here signifies, for example, in the case of contents recorded from a digital broadcast, a system which complies with the copy-once requirement, and after the contents are moved, the contents are deleted from the apparatus of the move source.

In the example illustrated in FIG. 37, the apparatus B which serves as the contents move source extracts contents of the move object from the hard disk of the apparatus B itself and moves the contents to a DVD of the apparatus C designated as the move destination in accordance with the system conforming to the copyright.

Whichever one of apparatus which are connected always in a home network and cooperate with each other is accessed, owned contents tables in all of the apparatus existing in the home network can be acquired. Accordingly, it is also possible to access the apparatus A and perform a moving operation of contents from the apparatus B to the apparatus C as illustrated in FIG. 37.

For example, if contents of the program title of "baseball" are selected as a move object on the owned contents table screen shown in FIG. 33 and the "quantity" of contents to be moved is 2 or more (in the example illustrated, 3), then since the contents are deleted from the move source apparatus after they are moved, the quantity of the same contents decreases by one on the owned contents table screen shown in FIG. 33 (refer to FIG. 39).

Also after the contents are moved, if one or more such contents are present on the hard disk of any of the network AV apparatus in the home network, reproduction of the same contents from the network AV apparatus in the home network is possible similarly as in the case prior to the move. Therefore, even where the contents are under copy-once protect, after the move of the contents, backup copies can be left on various disks while the contents remain on the hard disk of an apparatus in the home network.

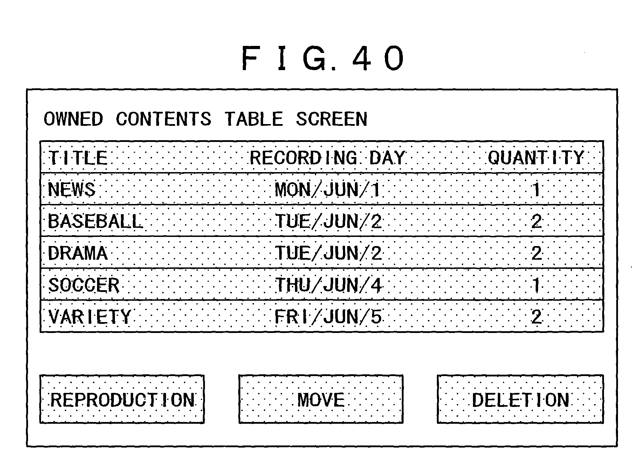

Further, if contents whose quantity is only one like the contents whose program title is "soccer" on an owned contents table screen shown in FIG. 40 are selected as a move object, then after the move of the contents, the same contents are not owned in the home network any more as a result of deletion of the contents from the move source.

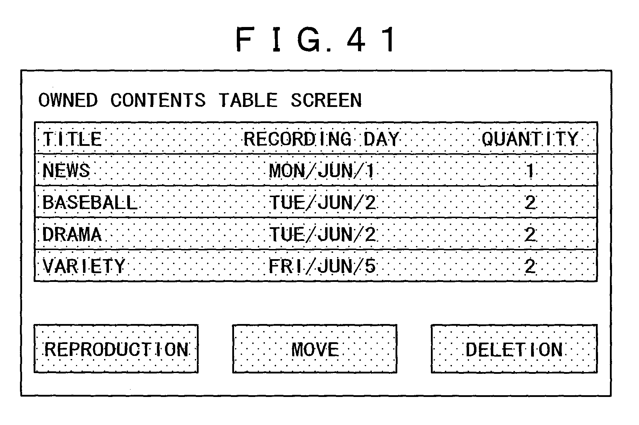

In such an instance, after the move of the contents, since the number of object contents existing on the hard disks of the network AV apparatus in the home network becomes zero, the entry of the contents is deleted from the owned contents table screen as seen in FIG. 41. Further, after the move of the contents, the contents cannot be reproduced on the network, but can be reproduced only through the mobile apparatus or disk which is the contents move destination.

While preferred embodiments of the present invention have been described using specific terms, such description is for illustrative purposes only, and it is to be understood that changes and variations may be made without departing from the scope of the following claims.

Various respective aspects and features of the invention are defined in the appended claims. Features from the dependent claims may be combined with features of the independent claims as appropriate and not merely as explicitly set out in the claims.

## Claims

1. A contents processing system wherein a plurality of apparatus having a recording reservation function cooperate with each other on a network to perform a process conforming to copyright for broadcast contents, comprising:
a recording reservation inputting section operable by a user for designating a broadcasting program to be reserved for recording and a recording quantity of the broadcasting program;
a recording reservation setting section operable in response to a recording reservation inputted through said recording reservation inputting section for specifying, from among those of said apparatus which cooperate with each other on said network, those apparatus to which the recording reservation should be set; and
an owned contents management section for managing contents recorded and owned by the apparatus which cooperate with each other on said network.

2. The contents processing system according to claim 1, wherein the broadcast contents are digital broadcast contents whose copy-once requirement is obliged.

3. The contents processing system according to claim 1, wherein said recording reservation inputting section presents information relating to the broadcasting program reserved for recording together with the designated recording quantity on a recording reservation screen.

4. The contents processing system according to claim 1, wherein said recording reservation setting section specifies those apparatus to which a recording reservation should be set in accordance with predetermined recording reservation conditions.

5. The contents processing system according to claim 4, wherein said recording reservation setting section performs the specification of the apparatus using whether a recording reservation is set already in a time zone which overlaps with that of the recording reservation, whether a free recording capacity sufficient for reserved recording of the recording reservation is available and whether a recording reservation setting can be accepted as the recording reservation conditions.

6. The contents processing system according to claim 1, wherein said recording reservation inputting section accepts, when the recording quantity of 2 or more is designated, designations of recording modes which are different among different ones of the apparatus to which the recording reservation should be set.

7. The contents processing system according to claim 1, wherein said owned contents management section presents contents owned by those apparatus which cooperate with each other on said network together with the total number of the owned contents on an owned contents table screen.

8. The contents processing system according to claim 7, wherein a request for processing regarding any of the owned contents such as reproduction, move or deletion of contents is accepted on the owned contents table screen.

9. The contents processing system according to claim 1, further comprising a contents reproduction section for performing a reproduction process of contents in response to a reproduction request of the contents inputted through said recording reservation inputting section.

10. The contents processing system according to claim 9, wherein said contents reproduction section selects, from among two or more of those apparatus which own object contents, an apparatus having a high surplus processing capacity so as to reproduce the contents.

11. The contents processing system according to claim 1, further comprising a contents moving section operable in response to a move request of contents conforming to copyright inputted through said recording reservation inputting section for performing a move process of the contents to a designated move destination apparatus.

12. The contents processing system according to claim 11, wherein said contents moving section selects, from among two or more of those apparatus which own object contents, an apparatus having a high surplus processing capacity as a contents move source apparatus.

13. The contents processing system according to claim 11, wherein said contents moving section deletes the object contents from the move source apparatus after the object contents are moved to the move destination apparatus.

14. The contents processing system according to claim 7, wherein, when the total number of contents owned by those apparatus which cooperate with each other on said network decreases as a result of move of contents, said owned contents management section updates a display of the owned number of contents on the owned contents table screen.

15. A contents processing method wherein a plurality of apparatus having a recording reservation function cooperate with each other on a network to perform a process conforming to copyright for broadcast contents, comprising:
a recording reservation inputting step, performed by a user, of designating a broadcasting program to be reserved for recording and a recording quantity of the broadcasting program;
a recording reservation setting step, performed in response to a recording reservation inputted at the recording reservation inputting step, of specifying, from among those of said apparatus which cooperate with each other on said network, those apparatus to which the recording reservation should be set; and
an owned contents management step of managing contents recorded and owned by the apparatus which cooperate with each other on said network.

16. The contents processing method according to claim 15, wherein the broadcast contents are digital broadcast contents whose copy-once requirement is obliged.

17. The contents processing method according to claim 15, wherein, at the recording reservation inputting step, information relating to the broadcasting program reserved for recording is presented together with the designated recording quantity on a recording reservation screen.

18. The contents processing method according to claim 15, wherein, at the recording reservation setting step, those apparatus to which a recording reservation should be set are specified in accordance with predetermined recording reservation conditions.

19. The contents processing method according to claim 18, wherein, at the recording reservation setting step, the specification of the apparatus is performed using whether a recording reservation is set already in a time zone which overlaps with that of the recording reservation, whether a free recording capacity sufficient for reserved recording of the recording reservation is available and whether a recording reservation setting can be accepted as the recording reservation conditions.

20. The contents processing method according to claim 15, wherein, at the recording reservation inputting step, when the recording quantity of 2 or more is designated, designations of recording modes which are different among different ones of the apparatus to which the recording reservation should be set are accepted.

21. The contents processing method according to claim 15, wherein, at the owned contents management step, contents owned by those apparatus which cooperate with each other on said network are presented together with the total number of the owned contents on an owned contents table screen.

22. The contents processing method according to claim 21, wherein a request for processing regarding any of the owned contents such as reproduction, move or deletion of contents is accepted on the owned contents table screen.

23. The contents processing method according to claim 15, further comprising a contents reproduction step of performing a reproduction process of contents in response to a reproduction request of the contents inputted at the recording reservation inputting step.

24. The contents processing method according to claim 23, wherein, at the contents reproduction step, from among two or more of those apparatus which own object contents, an apparatus having a high surplus processing capacity is selected so as to reproduce the contents.

25. The contents processing method according to claim 15, further comprising a contents moving step, performed in response to a move request of contents conforming to copyright inputted at the recording reservation inputting step, of performing a move process of the contents to a designated move destination apparatus.

26. The contents processing method according to claim 25, wherein, at the contents moving step, from among two or more of those apparatus which own object contents, an apparatus having a high surplus processing capacity is selected as a contents move source apparatus.

27. The contents processing method according to claim 25, wherein, at the contents moving step, the object contents are removed from the move source apparatus after the object contents are moved to the move destination apparatus.

28. The contents processing method according to claim 21, wherein, when the total number of contents owned by those apparatus which cooperate with each other on said network decreases as a result of move of contents, at the owned contents management step, a display of the owned number of contents on the owned contents table screen is updated.

29. A computer program described in a computer-readable form for causing a plurality of apparatus having a recording reservation function to cooperate with each other on a network to execute a process conforming to copyright for broadcast contents on a computer system, comprising:
a recording reservation inputting step, performed by a user, of designating a broadcasting program to be reserved for recording and a recording quantity of the broadcasting program;
a recording reservation setting step, performed in response to a recording reservation inputted at the recording reservation inputting step, of specifying, from among those of said apparatus which cooperate with each other on said network, those apparatus to which the recording reservation should be set; and
an owned contents management step of managing contents recorded and owned by the apparatus which cooperate with each other on said network.
